(19) Europäisches Patentamt
European Patent Office
Office européen des brevets

(11) EP 1 832 594 B1

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(51) Int Cl.:
***C07F 9/30*** *(2006.01)* ***C08K 5/5313*** *(2006.01)*

(21) Anmeldenummer: **07004222.1**

(22) Anmeldetag: **01.03.2007**

(54) **Mischungen aus Mono-Carboxylfunktionalisierten Dialkylphosphinsäuren, ein Verfahren zu ihrer Herstellung und ihre Verwendung**

Compounds of mono-carboxyl functionalised dialkylphosphine acid salts, a method for their manufacture and their application

Mélanges en sels d'acides dialkyl phosphiniques fonctionnalisés par monocarboxyle, un procédé destiné à sa fabrication et à son utilisation

(84) Benannte Vertragsstaaten:
**AT BE CH DE ES FR GB IT LI NL**

(30) Priorität: **07.03.2006 DE 102006010362**

(43) Veröffentlichungstag der Anmeldung:
**12.09.2007 Patentblatt 2007/37**

(73) Patentinhaber: **Clariant Finance (BVI) Limited**
**Road Town, Tortola (VG)**

(72) Erfinder:
- **Maas, Wiebke**
  **50354 Hürth (DE)**
- **Krause, Werner**
  **50354 Hürth (DE)**
- **Bauer, Harald**
  **50170 Kerpen (DE)**

(74) Vertreter: **Jacobi, Carola et al**
**Clariant Produkte (Deutschland) GmbH**
**Group Intellectual Property**
**Am Unisys-Park 1**
**65843 Sulzbach (DE)**

(56) Entgegenhaltungen:
**EP-A- 1 544 205** **JP-A- 7 197 319**
**JP-A- 2000 344 843** **US-A- 6 017 903**

- **KHAIRULLIN, V. K. ET AL: "Reaction of chlorides of acids of trivalent phosphorus with conjugated systems. I. Reaction of ethylphosphonous dichloride with .alpha.,.beta.-unsaturated acids" ZHURNAL OBSHCHEI KHIMII , 36(2), 289-96 CODEN: ZOKHA4; ISSN: 0044-460X, 1966, XP008078816**
- **KHAIRULLIN, V. K. ET AL: "Reaction of ethylphosphonous dichloride with crotonic acid" ZHURNAL OBSHCHEI KHIMII , 36(3), 494-8 CODEN: ZOKHA4; ISSN: 0044-460X, 1966, XP009084872**
- **PUDOVIK, A. N. ET AL: "New method of synthesis of esters of phosphonic and thiophosphonic acids. XVI. Synthesis of esters of mono- and diphosphono- and thiophosphonocarboxylic acids" IZVESTIYA AKADEMII NAUK SSSR, SERIYA KHIMICHESKAYA 636-45 CODEN: IASKA6; ISSN: 0002-3353, 1954, XP009084884**
- **GROBELNY D ET AL: "BINDING ENERGETICS OF PHOSPHORUS-CONTAINING INHIBITORS OF THERMOLYSIN" BIOCHEMISTRY, AMERICAN CHEMICAL SOCIETY. EASTON, PA, US, Bd. 28, Nr. 12, 1. Juni 1989 (1989-06-01), Seiten 4948-4951, XP000009206 ISSN: 0006-2960**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 832 594 B1

## Beschreibung

Die Erfindung betrifft ein Verfahren zur Herstellung von Mischungen aus Mono-Carboxylfunktionalisierten Dialkylphosphinsäuren.

Eine Reihe von Mono-Carboxylfunktionalisierten Dialkylphosphinsäuren und deren Derivate sind bekannt und werden vorwiegend als Flammschutzmittel eingesetzt. Sie können nach verschiedenen Verfahren hergestellt werden.

Im Stand der Technik mehrfach beschrieben sind Verfahren, bei denen eine Mono-Carboxylfunktionalisierte Dialkylphosphinsäure bzw. dessen Anhydrid erhalten wird, in dem Phosphonigsäure-dihalogenide (Dihalogenphosphine) mit aktivierten olefinischen Verbindungen wie z.B. Acrylsäure- oder Methacrylsäurederivaten umgesetzt werden (Houben-Weyl, Band 12/1, S. 230; V. K. Khajrullin, F. M. Kondrat'eva und A. N. Pudovik, Z. obsc. Chim. 38, 291-294 (1968); DE-A-2 528 420, JP-A-05/194 562).

Nachteilig an dem vorgenannten Stand der Technik ist die synthesebedingte Bildung von halogenhaltigen Nebenprodukten. Unter halogenhaltigen Verbindungen werden hierbei solche chemischen Verbindungen verstanden, in denen Atome der 7. Hauptgruppe, insbesondere Fluor, Chlor, Brom und Iod, chemisch an Kohlenstoff oder Phosphor gebunden, vorliegen. Außerdem werden unter halogenhaltigen Verbindungen auch solche Salze verstanden, die Halogenid-Anionen enthalten. Halogenhaltige Verbindungen, insbesondere Chlorhaltige Verbindungen, sind oft vielfach korrosiver als halogenfreie Verbindungen.

Bezüglich der Anwendung als Flammschutzmittel besitzen halogenhaltige Verbindungen den Nachteil, dass sich im Brandfall korrosive und giftige Gase bilden können, die den Einsatz solcher Verbindungen als Flammschutzmittel zumindest fraglich erscheinen lassen, wenn nicht sogar ein Einsatz gar nicht möglich ist. Zu den am häufigsten eingesetzten Phosphonsäure-Dihalogeniden gehört das Methyldichlorphosphin, welches selbst bisher in einer sehr aufwendigen Synthese aus Phosphortrichlorid und Methylchlorid in Gegenwart von Aluminiumchlorid hergestellt wird (Houben-Weyl, Band 12/1, S. 306). Die Reaktion ist stark exotherm und technisch nur schwierig zu beherrschen. Es werden zudem verschiedene, v.a.D. halogenhaltige Nebenprodukte gebildet, die, wie zum Teil auch die vorgenannten Ausgangsprodukte selbst, giftig und/oder korrosiv, also höchst unerwünscht, sind. Angesichts des Korrosionseffekts und der Unverträglichkeit mit der Umwelt ist der Einsatz solcher Edukte und der daraus erhaltenen Nebenprodukte möglichst zu vermeiden.

Eine weitere Methode zur Synthese Mono-Carboxylfunktionalisierter Dialkylphosphinsäuren basiert auf der Umsetzung von Phosphonigsäure-Bis(trimethylsilyl)ester, $HP(OSiMe_3)_2$, mit $\alpha$,$\beta$-ungesättigten Karbonsäure-Komponenten, anschließender Alkylierung mit Alkylhalogeniden nach der Arbuzov-Reaktion und Alkoholyse zu der entsprechenden Dialkylphosphinsäure (Kurdyumova, N. R.; Rozhko, L. F.; Ragulin, V. V.; Tsvetkov, E. N.; Russian Journal of General Chemistry (Translation of Zhurnal Obshchei Khimii) (1997), 67(12), 1852-1856).
Auch dieser Syntheseweg hat den Nachteil, dass halogenhaltige Verbindungen eingesetzt werden müssen.

Der als Edukt eingesetzte Phosphonigsäure-Bis(trimethylsilyl)ester wird dabei aus Kalium- oder Ammoniumhypophosphit durch Umsetzung mit Hexamethyldisilazan erhalten.

Hexamethyldisilazan steht weder in großtechnischen Mengen zur Verfügung noch rechnet sich sein Einsatz, da seine Herstellung ebenfalls aufwendig ist. Eine ökonomische und wirtschaftliche Herstellung von Mono-Carboxylfunktionalisierten Dialkylphosphinsäuren ist auf diesem Wege nicht möglich.

Die EP-A-1 544 205 beschreibt ein Verfahren zur Herstellung von Dialkylphosphinsäuresalzen, bei dem in einem ausgewählten Lösungsmittelsystem die entsprechenden Salze aus einem Olefin und hypophosphoriger Säure bzw. deren Salze als Edukte hergestellt werden. Mit diesem Verfahren sind die gewünschten Verbindungen der Formel (I) allerdings nicht zugänglich.

In der EP-0 516 346 A1 wird die Herstellung von Phosphinsäure-Telomeren durch Umsetzung von Natriumhypophosphit mit Acrylsäure-Komponenten in Gegenwart eines radikalischen Initiators beschrieben. Die Acrylsäure-Komponente wird im Überschuss eingesetzt, damit Telomere gebildet werden. Die Telomere können als Scale-Inhibitoren verwendet werden.

Es besteht daher ein Bedarf an Mono-Carboxylfunktionalisierten Dialkylphosphinsäuren, die halogenarm bzw. sogar halogenfrei sind.

Es besteht auch ein Bedarf an einem Verfahren zur Herstellung Mono-Carboxylfunktionalisierte Dialkylphosphinsäuren, welches halogenarm bzw. sogar halogenfrei, auf einfache und wirtschaftliche Art und Weise durchführbar ist und bei dem einheitliche Produkte in hoher Ausbeute und Reinheit erhalten werden. Auch sollte ein solches Verfahren den bisher bekannten umwelttechnisch deutlich überlegen sein.

Eine weitere Aufgabe der Erfindung ist es daher, ein Verfahren zur Herstellung von Mono-Carboxylfunktionalisierten Dialkylphosphinsäuren zur Verfügung zu stellen, das die vorgenannten Nachteile des Standes der Technik vermeidet und von Hypophosphorige Säure oder deren Salzen ausgeht.

Es ist jedoch zunächst Aufgabe der vorliegenden Erfindung, extrem halogenarme/halogenfreie Mono-Carboxylfunktionalisierte Dialkylphosphinsäuren zur Verfügung zu stellen.

Diese Aufgabe wird gelöst durch ein Verfahren zur Herstellung von Mischungen aus Dialkylphosphinsäuren

und weiteren Komponenten, enthaltend

A) 98 bis 100 Gew.-% Mono-Carboxylfunktionalisierte Dialkylphosphinsäuren der Formel (I)

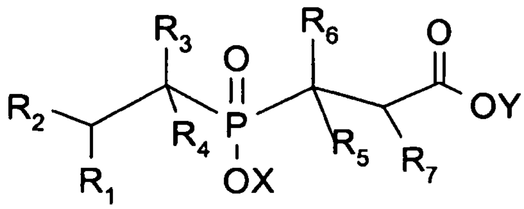

(I)

in der $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, n-Butyl, Isobutyl, tert. Butyl und/oder Phenyl bedeuten
X, Y gleich oder verschieden sind und unabhängig voneinander H, Li, Na, K oder $NH_4$
bedeuten, und
B) 0 bis 2 Gew.-% Halogene,
wobei die Summe der Komponenten immer 100 Gew.-% beträgt, dadurch gekennzeichnet, dass man hypophosphorige Säure oder deren Salze (Komponente C) der Formel II

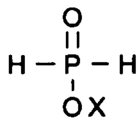

II

in der X H, Na, K oder $NH_4$ bedeutet, in Gegenwart eines radikalischen Initiators mit einem $\alpha,\beta$-ungesättigten Carbonsäure-Derivat (Komponente D) der Formel III,

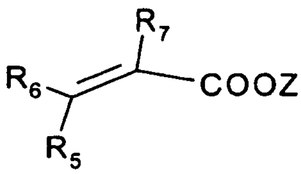

III

in der $R_5$, $R_6$, $R_7$ die gleiche Bedeutung wie in Formel I aufweisen und Z H, $C_{1-18}$-Alkyl oder $C_{6-18}$-Aryl bedeutet oder für Y steht, und mit einem Olefin (Komponente E) der Formel IV

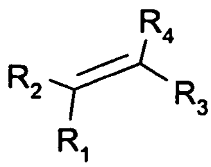

IV

in der $R_1$, $R_2$, $R_3$, $R_4$ die gleiche Bedeutung wie in Formel I aufweisen, umsetzt, wobei die Komponenten D und E nicht gleichzeitig, sondern jeweils separat (hintereinander oder nacheinander) dosiert werden.

Bevorzugt sind $R_1$, $R_2$, $R_3$, $R_4$, $R_5$, $R_6$, $R_7$ gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt bedeutet X H und Z H, Methyl, Ethyl, n-Propyl, Isopropyl, n-Butyl, Isobutyl, tert.-Butyl, Hydroxyethyl oder Hydroxypropyl.

Die Aufgabe wird auch gelöst durch ein Verfahren, bei dem in einem Schritt 1 die Komponente C in Gegenwart eines radikalischen Initiators mit Komponente E zu einer Alkylphosphonigen Säure umgesetzt wird und in Schritt 2 die resultierende Reaktionslösung mit einem Alkohol verestert wird und dabei entstehende Phosphonigsäureester destillativ abgetrennt wird und dann in einem Schritt 3 in Gegenwart eines radikalischen oder eines basischen Initiators mit Komponente D umgesetzt wird, wobei anschließend die resultierende Reaktionslösung in einem Schritt 4 unter saurer Katalyse hydrolisiert wird, um so die Komponente A (Mono-Carboxylfunktionalisierte Dialkylphosphinsäure) zu erhalten.

Bevorzugt wird im Schritt 2 die alkylphosphonige Säure mit einem linearen oder verzweigten Alkohol der allgemeinen Formel M-OH, wobei M für einen linearen oder verzweigten Alkylrest mit 1 bis 10 Kohlenstoffatomen steht, direkt verestert.

Bevorzugt handelt es sich bei dem Alkohol um n-Butanol, Iso-Butanol oder Ethylhexanol.

Bevorzugt handelt es sich bei der Komponente C um das Ammonium- oder Natriumsalz der hypophosphorigen Säure.

Bevorzugt handelt es sich bei dem Initiator um einen radikalischen, anionischen, kationischen oder photochemischen Initiator.

Bevorzugt handelt es sich bei dem Initiator um Peroxide bildende Verbindungen und/oder Peroxoverbindungen wie Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azoverbindungen wie Azodiisobutyronitril, 2,2-Azobis(2-amidinopropan)-dihydrochlorid und/oder 2,2'-Azobis(N,N'-dimethylen-isobutyramidin)-dihydrochlorid.

Bevorzugt handelt es sich bei den $\alpha,\beta$-ungesättigten Carbonsäuren um Acrylsäure, Acryl-säuremethylester, Acrylsäureethylester, Methacrylsäure, Acrylsäurehydroxy-ethylester, Crotonsäure, Crotonsäureethylester, und/oder Tiglinsäure (trans 2,3-Dimethylacryl-säure).

Bevorzugt handelt es sich bei dem Olefin um Ethylen, Propylen, n-Buten und/oder i-Buten oder beliebige Gemische davon, 1-Hexen, 1-Hepten und/oder 1-Octen; Allylalkohol, Allylamin, Allyl-benzol, Allylanisol, Styrol, $\alpha$-Methylstyrol, 4-Methylstyrol und/oder Vinylacetat.

Bevorzugt erfolgt die die Umsetzung der Komponente C mit den Komponenten D und/oder E bei einer Temperatur von 50 bis 150°C.

Bevorzugt handelt es sich bei der Mono-Carboxylfunktionalisierten Dialkylphosphinsäure um 3-(Ethylhydroxy-phosphinyl)-propionsäure, 3-(Propylhydroxy-phosphinyl)-propionsäure, 3-(Ethylhydroxyphosphinyl)-Buttersäure, 3-(Ethylhydroxy-phosphinyl)-2-methyl-Propionsäure, 3-(Butylhydroxyphosphinyl)-Propionsäure, 3-(Propylhydroxy-phosphinyl)-Buttersäure, 3-(Butylhydroxy-phosphinyl)-Buttersäure, 3-(Ethylhydroxyphosphinyl)-Pentansäure, 3-(Propylhydroxy-phosphinyl)-Pentansäure, 3-(Butylhydroxy-phosphinyl)-Pentansäure, 3-(Propylhydroxy-phosphinyl)-2-methyl-Propionsäure, 3-(Butylhydroxy-phosphinyl)-2-methyl-Propionsäure, 3-(Ethylhydroxyphosphinyl)-2-methyl-Buttersäure, 3-(Propylhydroxy-phosphinyl)-2-methyl-Buttersäure und/oder 3-(Butylhydroxy-phosphinyl)-2-methyl-Buttersäure handelt.

Bevorzugt enthalten die Mischungen 99,9995 bis 100 Gew.-% Mono-Carboxylfunktionalisierte Dialkylphosphinsäuren der Formel (I) und 0 bis 0,0005 Gew.-% Halogene.

Die Erfindung betrifft auch ein Verfahren zur Herstellung von Mischungen aus Dialkylphosphinsäuren und weiteren Komponenten, enthaltend

A) 98 bis 100 Gew.-% Mono-Carboxylfunktionalisierte Dialkylphosphinsäuren der Formel (I)

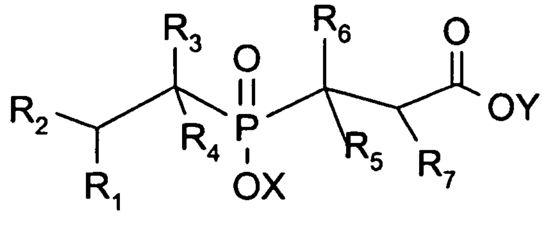

(I)

in der $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, n-Butyl, Isobutyl, tert. Butyl und/oder Phenyl bedeuten

X, Y gleich oder verschieden sind und unabhängig voneinander H, Li, Na, K oder $NH_4$

bedeuten, und
B) 0 bis 2 Gew.-% Halogene,
wobei die Summe der Komponenten immer 100 Gew.-% beträgt, dadurch gekennzeichnet, dass man hypophosphorige Säure oder deren Salze (Komponente C) der Formel II

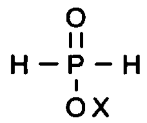

II

in der X H, Na, K oder $NH_4$ bedeutet, in einem Schritt 1 mit Aceton zu 1-Hydroxy-1-dialkylphosphinat umsetzt, in einem Schritt 2 dieses 1-Hydroxy-1-dialkylphosphinat in Gegenwart eines radikalischen Initiators mit einem α,β-ungesättigten Carbonsäure-Derivat (Komponente D) der Formel III,

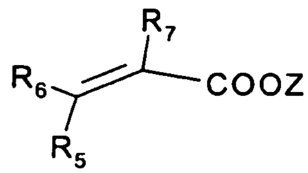

III

in der $R_5$, $R_6$, $R_7$ die gleiche Bedeutung wie in Formel I aufweisen und Z
H, $C_{1-18}$-Alkyl oder $C_{6-18}$-Aryl bedeutet oder für Y steht, umsetzt, dann in einem Schritt 3 das Aceton abtrennt und in einem Schritt 4 das resultierende Reaktionsgemisch in Gegenwart eines radikalischen Initiators mit einem Olefin (Komponente E) der Formel IV

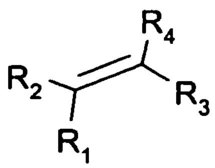

IV

in der $R_1$, $R_2$, $R_3$, $R_4$ die gleiche Bedeutung wie in Formel I aufweisen, umsetzt.

Die Erfindung betrifft schließlich auch ein Verfahren zur Herstellung von Mischungen aus Dialkylphosphinsäuren und weiteren Komponenten, enthaltend

A) 98 bis 100 Gew.-% Mono-Carboxylfunktionallsierte Dialkylphosphinsäuren der Formel (I)

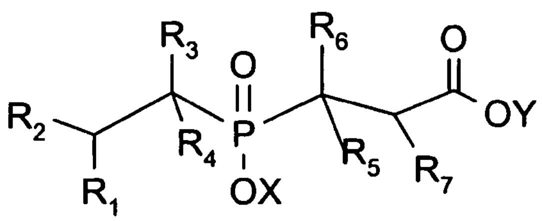

(I)

in der $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, n-Butyl, Isobutyl, tert. Butyl und/oder Phenyl bedeuten
X, Y gleich oder verschieden sind und unabhängig voneinander H, Li, Na, K oder $NH_4$
bedeuten, und
B) 0 bis 2 Gew.-% Halogene,
wobei die Summe der Komponenten immer 100 Gew.-% beträgt, dadurch gekennzeichnet, dass man die hypophosphorige Säure oder deren Salze (Komponente C) der Formel II

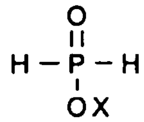

II

in der X H, Na, K oder $NH_4$ bedeutet, in einem Schritt 1 mit Aceton zu 1-Hydroxy-1-methylethylphosphinat umsetzt, in einem Schritt 2 dieses 1-Hydroxy-1-methylethylphosphinat in Gegenwart eines radikalischen Initiators mit einem Olefin (Komponente E) der Formel IV

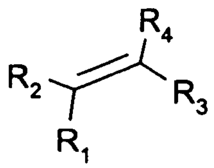

IV

in der $R_1$, $R_2$, $R_3$, $R_4$ die gleiche Bedeutung wie in Formel I aufweisen, umsetzt, dann in einem Schritt 3 das Aceton abtrennt und in einem Schritt 4 das resultierende Reaktionsgemisch in Gegenwart eines radikalischen Initiators mit der einem $\alpha$,$\beta$-ungesättigten Carbonsäure-Derivat (Komponente D) der Formel III,

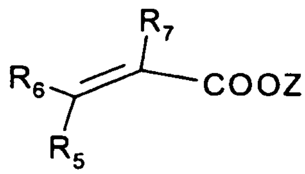

III

in der $R_5$, $R_6$, $R_7$ die gleiche Bedeutung wie in Formel I aufweisen und Z
H, $C_{1-18}$-Alkyl oder $C_{6-18}$-Aryl bedeutet oder für Y steht, umsetzt.

Bevorzugt wird bei Einsatz der Komponente D mit Z = $C_{1-18}$-Alkyl oder $C_{6-18}$-Aryl eine Hydrolyse des gebildeten Mono-Carboxylfunktionalisierten Dialkylphosphinsäureesters durchgeführt.

Die Erfindung betrifft auch die Verwendung der nach dem erfindungsgemäßen Verfahren hergestellten Mischungen als Flammschutzmittel oder zur Herstellung von Flammschutzmitteln.

Bevorzugt werden die Mischungen als Flammschutzmittel oder zur Herstellung von Flammschutzmitteln, flammgeschützten Formmassen und/oder flammgeschützten Polymer-Formkörpern, -Filmen, -Fäden und -Fasern verwendet.

Bevorzugt enthält die flammgeschützte Formmasse bzw. die Polymer-Formkörper, -Filme, -Fäden und -Fasern 1 bis 50 Gew.-% der Mischungen nach einem oder mehreren der Ansprüche 1 bis 3, 1 bis 99 Gew.-% Polymer oder Mischungen derselben, 0 bis 60 Gew.-% Additive und 0 bis 60 Gew.-% Füllstoff, wobei die Summe der Komponenten immer 100 Gew.-% beträgt.

Grundsätzlich können in der Formel I die Gruppen $R_1$, $R_2$, $R_3$, $R_4$, $R_5$, $R_6$, $R_7$ gleich oder verschieden sind und unabhängig voneinander $C_1$-$C_{18}$-Alkyl, $C_6$-$C_{18}$-Aryl, $C_6$-$C_{18}$-Aralkyl, $C_6$-$C_{18}$-Alkyl-Aryl, CN, CHO, $OC(O)CH_2CN$, CH $(OH)C_2H_5$, $CH_2CH(OH)CH_3$, 9-Anthracen, 2-Pyrrolidon, $(CH_2)_mOH$, $(CH_2)_mNH_2$, $(CH_2)_mNCS$, $(CH_2)_mNC(S)NH_2$, $(CH_2)_mSH$, $(CH_2)_mS$-2-thiazolin, $(CH_2)_mSiMe_3$, $C(O)R_8$, $(CH_2)_mC(O)R_8$, CH=CH-$R_8$, CH=CH-C(O)$R_8$ bedeuten, wobei $R_8$ für $C_1$-$C_8$-Alkyl oder $C_6$-$C_{18}$-Aryl steht m eine ganze Zahl von 0 bis 10, bevorzugt 1 bis 10 bedeutet.

Bevorzugt enthalten diese Mischungen 99 bis 100 Gew.-% Dialkylphosphinsäuren der Formel (I) und 0 bis 1 Gew.-% Halogene.

Besonders bevorzugt enthalten diese Mischungen 99,99 bis 100 Gew.-% Dialkylphosphinsäuren der Formel (1) und 0 bis 0,01 Gew.-% Halogene.

Insbesondere enthalten die Mischungen 99,9995 bis 100 Gew.-% Mono-Carboxylfunktionalisierte Dialkylphosphinsäuren der Formel (I) und 0 bis 0,0005 Gew.-% Halogene.

Bevorzugt sind die Gruppen $C_6$-$C_{18}$-Aryl, $C_6$-$C_{18}$-Aralkyl und $C_6$-$C_{18}$-Alkyl-Aryl mit $SO_3X_2$, -C(O)CH3, OH, $CH_2OH$, $CH_3SO_3X_2$, $PO_3X_2$, $NH_2$, $NO_2$, $OCH_3$, SH und/oder $OC(O)CH_3$ substituiert.

Bevorzugt enthalten die Mischungen

A) 99,9995 bis 100 Gew.-% an 3-(Ethylhydroxyphosphinyl)-propionsäure, 3-(Propylhydrooy-phosphinyl)-propionsäure, 3-(Ethylhydroxyphosphinyl)-Buttersäure, 3-(Ethylhydroxy-phosphinyl)-2-methyl-Propionsäure, 3-(Butylhydroxyphosphinyl)-Propionsäure, 3-(Propylhydroxy-phosphinyl)-Buttersäure, 3-(Butylhydroxy-phosphinyl)-Buttersäure, 3-(Ethylhydroxy-phosphinyl)-Pentansäure, 3-(Propylhydroxy-phosphinyl)-Pentansäure, 3-(Butylhydroxy-phosphinyl)-Pentansäure, 3-(Propylhydroxy-phosphinyl)-2-methyl-Propionsäure, 3-(Butylhydroxy-phosphinyl)-2-methyl-Propionsäure, 3-(Ethylhydroxy-phosphinyl)-2-methyl-Buttersäure, 3-(Propylhydroxy-phosphinyl)-2-methyl-Buttersäure und/oder 3-(Butylhydroxy-phosphinyl)-2-methyl-Buttersäure und

B) 0 bis 0,0005 Gew.-% an Chlor.

Das Verfahren wird bevorzugt so ausgeführt, dass in einem ersten Verfahrensschritt die Komponente C in Gegenwart eines radikalischen Initiators mit Komponente D umgesetzt und in einem zweiten Verfahrensschritt die resultierende Reaktionslösung ebenfalls in Gegenwart eines radikalischen Initiators mit Komponente E umgesetzt wird.

Nach einer anderen Verfahrensweise wird in einem ersten Verfahrensschritt die Komponente C in Gegenwart eines radikalischen Initiators mit Komponente E umgesetzt und in einem zweiten Verfahrensschritt die resultierende Reaktionslösung ebenfalls in Gegenwart eines radikalischen Initiators mit Komponente D umgesetzt.

Das erfindungsgemäße Verfahren ist weiterhin dadurch gekennzeichnet, dass die Komponenten C, D und E in folgenden Molverhältnissen eingesetzt werden:

$$p\,C + \sum_{k=1}^{n-1} x_k\,D + \sum_{k=1}^{n-1} y_k\,E + (\alpha - x_n)\,D + (\alpha - y_n)\,E = A$$

wobei C für die hypophosphorige Säure oder deren Salze der Formel II, D für das α,β-ungesättigte Carbonsäurederivat der Formel III, E für das Olefin der Formel IV und A für die Mono-Carboxylfunktionalisierte Dialkylphosphinsäure der Formel I steht und weiterhin gilt:

$$\sum_{k=1}^{n} x_k = \alpha \quad \text{und} \quad \sum_{k=1}^{n} y_k = \alpha \;,$$

wobei $\alpha$ = 1 bis 3; 0,01≤ $x_k$ und $y_k \leq \alpha$; p = 0,5 bis 3 und n = 1 bis 100 ist.

Das Verfahren kann auch so ausgeführt werden, dass in einem ersten Schritt 1 die Komponente C in Gegenwart eines radikalischen Initiators mit einer Teilmenge $x_k$ D der Komponente D in einem Schritt 2 die resultierende Reaktionslösung in Gegenwart eines radikalischen Initiators mit der gesamten Menge der Komponente E und in einem Schritt 3 die resultierende Reaktionslösung in Gegenwart eines radikalischen Initiators mit der restlichen Teilmenge ($\alpha$-$x_n$) D der Komponente D umgesetzt wird.

Das Verfahren kann weiterhin auch so ausgeführt werden, dass in einem ersten Schritt 1 die Komponente C in Gegenwart eines radikalischen Initiators mit einer Teilmenge $y_k$ E der Komponente E in einem Schritt 2 die resultierende Reaktionslösung in Gegenwart eines radikalischen Initiators mit der gesamten Menge der Komponente D und in einem Schritt 3 die resultierende Reaktionslösung in Gegenwart eines radikalischen Initiators mit der restlichen Teilmenge ($\alpha$-

$y_n$) E der Komponente E umgesetzt wird.

Das Verfahren kann außerdem auch so ausgeführt werden, dass in einem Schritt 1 die Komponente C in Gegenwart eines radikalischen Initiators mit einer Teilmenge $X_k$ D der Komponente D und in einem Schritt 2 die resultierende Reaktionslösung in Gegenwart eines radikalischen Initiators mit einer Teilmenge $y_k$E der Komponente E umgesetzt wird, wobei die Schritte 1 und 2 abwechselnd so häufig wiederholt werden, bis die jeweiligen Teilmengen verbraucht sind.

Das Verfahren kann auch so ausgeführt werden, dass in einem Schritt 1 die Komponente C in Gegenwart eines radikalischen Initiators mit einer Teilmenge $y_k$ E Komponente E und in einem Schritt 2 die resultierende Reaktionslösung in Gegenwart eines radikalischen Initiators mit einer Teilmenge $x_k$ D der Komponente D umgesetzt wird, wobei die Schritte 1 und 2 abwechselnd so häufig wiederholt werden, bis die jeweiligen Teilmengen verbraucht sind.

Das Verfahren kann in Variation auch so ausgeführt werden, dass in einem Schritt 1 die Komponente C in Gegenwart eines radikalischen Initiators mit Komponente E zu einer alkylphosphonigen Säure umgesetzt wird und in Schritt 2 die resultierende Reaktionslösung mit einem Alkohol verestert wird und dabei entstehende Phosphonigsäureester destillativ abgetrennt wird und dann in einem Schritt 3 in Gegenwart eines radikalischen oder eines basischen Initiators mit Komponente D umgesetzt wird, wobei anschließend die resultierende Reaktionslösung in einem Schritt 4 unter saurer Katalyse hydrolisiert wird, um so die Komponente A (Mono-Carboxyfunktionalisierte Dialkylphosphinsäure) zu erhalten.

Bevorzugt wird der Radikalinitator in Mengen von 0,001 bis 10 Mol-%, bezogen auf die phosphorhaltige Verbindung, eingesetzt.

Bevorzugt wird der Radikalinitator mit einer Geschwindigkeit von 0,01 bis 10 Mol-% Initiator pro Stunde, bezogen auf die phosphorhaltige Verbindung, zudosiert.

Bevorzugt beträgt das Verhältnis von Olefin zu Hypophosphit und/oder hypophosphoriger Säure (auf Mol-Basis) 1 zu 3 bis 3 zu 0,5, insbesondere 1,5 zu 3 bis 2,5 zu 1.

Bevorzugt erfolgt die Umsetzung mit der Olefin-Komponente E bei einem Druck des eingesetzten Olefins von 1 bis 100 bar, insbesondere von 1 bis 50 bar.

Bevorzugt erfolgt die Umsetzung der Komponente C mit den Komponenten D und/oder E bei einer Temperatur von 0 bis 250°C, insbesondere bei 20 bis 200°C.

Besonders bevorzugt erfolgt die Umsetzung der Komponente C mit den Komponenten D und/oder E bei einer Temperatur von 50 bis 150°C.

Ein weiteres Verfahren zur Herstellung von Mischungen nach einem oder mehreren der Ansprüche 1 bis 3, ist dadurch gekennzeichnet, dass man die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente D umsetzt, dann in einem Schritt 3 das Keton abtrennt und in einem Schritt 4 das resultierende Reaktionsgemisch in Gegenwart eines radikalischen Initiators mit der Komponente E umsetzt.

Das vorgenannte Verfahren kann auch so ausgeführt werden, dass man die Komponente C in einem Schritt 1 mit einem Keton zu 1-Hydroxy-1-dialkylphosphinat umsetzt, in einem Schritt 2 dieses 1-Hydroxy-1-dialkylphosphinat in Gegenwart eines radikalischen Initiators mit Komponente E umsetzt, dann in einem Schritt 3 das Keton abtrennt und in einem Schritt 4 das resultierende Reaktionsgemisch in Gegenwart eines radikalischen Initiators mit der Komponente D umsetzt.

Bevorzugt enthält das Flammschutzmittel 0,1 bis 90 Gew.-% der Mischungen nach einem oder mehreren der Ansprüche 1 bis 3 und 0,1 bis 50 Gew.-% weitere Additive, wobei die Summe der Komponenten immer 100 Gew.-% beträgt.

Besonders bevorzugt enthält das Flammschutz-mittel 10 bis 80 Gew.-% der Mischungen nach einem oder mehreren der Ansprüche 1 bis 3 und 10 bis 40 Gew.-% weitere Additive, wobei die Summe der Komponenten immer 100 Gew.-% beträgt.

Bevorzugt finden die Mischungen nach einem oder mehreren der Ansprüche 1 bis 3 Verwendung in flammgeschützten Formmassen.

Besonders bevorzugt enthält die flammgeschützte Formmasse 5 bis 30 Gew.-% der Mischungen nach einem oder mehreren der Ansprüche 1 bis 3, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Die Erfindung betrifft schließlich auch die Verwendung von Mischungen nach einem oder mehreren der Ansprüche 1 bis 3 als Flammschutzmittel in flammgeschützten Polymer-Formkörpern, -Filmen, -Fäden und -Fasern.

Besonders bevorzugt enthalten die Polymer-Formkörper, -Filme, -Fäden und -Fasern 5 bis 30 Gew.-% der Mischungen nach einem oder mehreren der Ansprüche 1 bis 3, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Definitionsgemäß schließt der begriff "Halogene" nicht nur die reinen Halogene wie Fluor, Chlor, Brom und Jod ein, sondern umfasst auch halogenhaltige Verbindungen, die sowohl anorganischer als auch organischer Natur sein können, mit ein.

Die erfindungsgemäßen Mischungen sind insbesondere frei von solchen halogenhaltigen Verbindungen, wie sie bei den bisherigen Syntheseprozessen nach dem bekannten Stand der Technik auftreten und sich aus dem gewünschten Produkt nur in begrenztem Mengen wieder entfernen lassen, d.h. diese Produkte weisen immer einen - wenn auch z.T. geringen - unerwünschten Gehalt an Halogen oder halogenhaltigen Verbindungen auf.

Die erfindungsgemäßen Mischungen weisen einen bisher unerreichten Grad an Halogenfreiheit auf, der so niedrig sein kann, dass er an der theoretischen Nachweisgrenze liegt. Insbesondere der Chlor-Gehalt kann minimisiert werden.

Bevorzugt enthalten die erfindungsgemäßen Mischungen

A) 99,9995 bis 100 Gew.-% an 3-(Ethylhydroxy-phosphinyl)-Propionsäure, 3-(Propylhydroxy-phosphinyl)-Propionsäure, 3-(Butylhydroxy-phosphinyl)-Propionsäure, 3-(Isobutylhydroxy-phosphinyl)-Propionsäure, 3-(Pentylhydroxy-phosphinyl)-Propionsäure, 3-(Hexylhydroxy-phosphinyl)-Propionsäure, 3-(Hydroxyethylhydroxy-phosphinyl)-Propionsäure, 3-(Ethylbenzylhydroxy-phosphinyl)-Propionsäure, 3-(Ethylhydroxy-phosphinyl)-Buttersäure, 3-(Propylhydroxy-phosphinyl)-Buttersäure, 3-(Butylhydroxy-phosphinyl)-Buttersäure, 3-(Isobutylhydroxy-phosphinyl)-Buttersäure, 3-(Pentylhydroxy-phosphinyl)-Buttersäure, 3-(Hexylhydroxy-phosphinyl)-Buttersäure, 3-(Hydroxyethylhydroxy-phosphinyl)-Buttersäure, 3-(Ethylbenzylhydroxy-phosphinyl)-Buttersäure, 3-(Ethylhydroxy-phosphinyl)-Pentansäure, 3-(Propylhydroxy-phosphinyl)-Pentansäure, 3-(Butylhydroxy-phosphinyl)-Pentansäure, 3-(Isobutylhydroxy-phosphinyl)-Pentansäure, 3-(Pentylhydroxy-phosphinyl)-Pentansäure, 3-(Hexylhydroxy-phosphinyl)-Pentansäure, 3-(Hydroxyethylhydroxy-phosphinyl)-Pentansäure, 3-(Ethylbenzylhydroxy-phosphinyl)-Pentansäure, 3-(Ethylhydroxy-phosphinyl)-2-methyl-Propionsäure, 3-(Propylhydroxy-phosphinyl)-2-methyl-Propionsäure, 3-(Butylhydroxy-phosphinyl)-2-methyl-Propionsäure, 3-(Isobutylhydroxy-phosphinyl)-2-methyl-Propionsäure, 3-(Pentylhydroxy-phosphinyl)-2-methyl-Propionsäure, 3-(Hexylhydroxy-phosphinyl)-2-methyl-Propionsäure, 3-(Hydroxyethylhydroxy-phosphinyl)-2-methyl-Propionsäure, 3-(Ethylbenzylhydroxy-phosphinyl)-2-methyl-Propionsäure, 3-(Ethylhydroxy-phosphinyl)-2-methyl-Buttersäure, 3-(Propylhydroxy-phosphinyl)-2-methyl-Buttersäure, 3-(Butylhydroxy-phosphinyl)-2-methyl-Buttersäure, 3-(Isobutylhydroxy-phosphinyl)-2-methyl-Buttersäure, 3-(Pentylhydroxy-phosphinyl)-2-methyl-Buttersäure, 3-(Hexylhydroxy-phosphinyl)-2-methyl-Buttersäure, 3-(Hydroxyethylhydroxy-phosphinyl)-2-methyl-Buttersäure und/oder 3-(Ethylbenzylhydroxy-phosphinyl)-2-methyl-Buttersäure und

B) 0 bis 0,0005 Gew.-% an Chlor.

Bevorzugt werden diese vorgenannten Mischungen nach dem erfindungsgemäßen Verfahren hergestellt.

Das erfindungsgemäße Verfahren weist gegenüber des Standes der Technik erhebliche Vorteile auf, da es Phosphonigsäuredihalogenide und andere halogenhaltigen Verbindungen völlig vermeidet. Damit sind auch die erfindungsgemäßen Produkte, die Mono-Carboxylfunktionalisierten Dialkylphosphinsäuren, weniger korrosiv als die bisher zugängliche Mono-Carboxylfunktionalisierten Dialkylphosphinsäuren. Die niedrigere Korrosivität ist nicht nur für die Handhabung bei der Herstellung sondern auch beim Einsatz als Flammschutzmittel von Vorteil.

Das erfindungsgemäße Verfahren wird so ausgeführt, dass Komponente C in Gegenwart eines radikalischen Initiators mit Komponente D und E in einem Lösungsmittel umgesetzt wird, wobei die Komponenten D und E nicht gleichzeitig sondern jeweils separat (hintereinander oder nacheinander) dosiert werden.

Handelt es sich bei der eingesetzten Komponente D nicht um eine freie Carbonsäure, sondern um einen Carbonsäureester, so muss vor oder nach der beschriebenen Umsetzung eine Hydrolyse durchgeführt werden, um die freie Carbonsäure zu erhalten.

Überraschender Weise kann durch iterative Umsetzung von $\alpha,\beta$-ungesättigte Carbonsäuren oder -estern und Olefinen mit Derivaten der Hypophosphorigen Säure ohne Isolierung der jeweiligen Monoalkylphosphinsäure-Derivate die Mono-Carboxylfunktionalisierten Dialkylphosphinsäure in guten Ausbeuten erhalten werden. Bei der Umsetzung mit einem $\alpha,\beta$-ungesättigte Carbonsäureester ist noch eine Hydrolyseschritt nötig, um die freie Mono-Carboxylfunktionalisierte Dialkylphosphinsäure zu erhalten.

Bevorzugt wird der Ester der Alkylphosphonigen Säure destillativ entfernt.

Die Veresterung der phosphonigen Säure zum entsprechenden Monoester kann beispielsweise durch Umsetzung mit höhersiedenden Alkoholen unter Entfernung des gebildeten Wassers durch Azeotropdestillation erreicht werden.

Bevorzugt wird in Anwesenheit von Katalysatoren addiert.

Bevorzugt handelt es sich dabei um basische Katalysatoren. Alternativ können auch radikalische oder kationische Initiatoren eingesetzt werden.

Bevorzugt handelt es sich bei den basischen Initiatoren um Alkali- und/oder Erdalkalialkoholate. Besonders

bevorzugt wird Natrium-Methanolat oder NatriumEthanolat verwendet.

Bevorzugt wird die Hydrolyse des Esters in Gegenwart einer starken Mineralsäure durchgeführt. Bevorzugt handelt es sich dabei um konzentrierte Schwefelsäure.

Bevorzugt beträgt das Verhältnis $\alpha,\beta$-ungesättigten Carbonsäuren-Derivate und Olefine zu Hypophosphit und/ oder hypophosphoriger Säure (auf Mol-Basis) entsprechend der vorgenannten Formel: $0.01 \leq x_k$ und $y_k \leq \alpha$, $\alpha$ = 1-3, p = 0.5-3.0, und n = 1-100, bevorzugt $0.05 \leq x_k$ und $y_k \leq \alpha$, $\alpha$ = 1-1.5, p = 0.8-1.2, n = 2-20.

Bevorzugt werden anorganische Lösungsmittel, organische Lösungsmittel oder beliebige Mischungen derselben eingesetzt, wobei das bevorzugte anorganische Lösungsmittel Wasser ist.

Bevorzugt wird der pH-Wert bei wässrigem Lösungsmittel auf 0 bis 14, besonders bevorzugt auf 2 bis 9 eingestellt.

Bevorzugt wird der pH-Wert mit Mineralsäuren, sauren Salzen, Carbonsäuren, Alkalien und/oder Elektrolyten wie z. B. Natriumbisulfat, Natriumbisulfit und/oder Kaliumbisulfit eingestellt.

Bevorzugt handelt es sich bei den Carbonsäuren um Ameisensäure, Essigsäure, Propionsäure, Buttersäure und/oder längerkettige Carbonsäuren und/oder um deren Dimere, Oligomere und/oder Polymere.

Bevorzugt handelt es sich bei dem Salz der hypophosphorigen Säure um ein Salz, dessen Kation ein Element der 1. Hauptgruppe ist und/oder dessen Kation auf ein organisch substituiertes Element der 5. Hauptgruppe basiert. Besonders bevorzugt handelt es um ein Ammonium- oder Alkalisalz, insbesondere um das Natriumsalz.

Bevorzugt stellt man die Hypophosphorige Säure in situ aus Salzen der hypophosphorigen Säure und mindestens einer Mineralsäure her, wobei das Verhältnis von Additiv-Säure zu Hypophosphit (auf Äquivalentbasis) 0 zu 1 bis 2 zu 1 beträgt.

Bevorzugt wird die Umsetzung in Gegenwart eines Radikalinitiators durchgeführt. Grundsätzlich sind als Radikalinitiatoren alle Systeme geeignet, die freie Radikale generieren. Die Addition des Olefins kann durch einen anionischen Initiator, radikalischen Initiator oder photochemisch initiiert werden.

Besonders bevorzugte Radikalinitiatoren sind Peroxo-Verbindungen wie Peroxomonoschwefelsäure, Kaliumpersulfat (Kaliumperoxomonosulfat), Caroat, Oxone, Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Besonders bevorzugt sind Verbindungen, die im Lösemittelsystem Peroxide bilden können wie Natriumperoxid, Natriumperoxidediperoxohydrat, Natriumperoxiddiperoxohydrathydrat, Natriumperoxidedihydrat, Natriumperoxidoctahydrat, Lithiumperoxid, Lithiumperoxidmonoperoxohydrattrihydrat, Calciumperoxid, Strontiumperoxid, Bariumperoxid, Magnesiumperoxid, Zinkperoxid, Kaliumhyperoxid, Kaliumperoxiddiperoxohydrat, Natriumperoxoboratetetrahydrat, Natriumperoxoborattrihydrat, Natriumperoxoboratmonohydrat, Wasserfreies Natrium peroxoborat, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Calciumhydrogenperoxide, Calciumperoxidperoxohydrat, Ammoniumtriphosphatediperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Besonders bevorzugt sind Wasserstoffperoxid, Perameisensäure, Peressigsäure, Benzoylperoxid, Di-t-butylperoxid, Dicumylperoxid, 2,4-Dichlorobenzoylperoxid, Decanoylperoxid, Lauroylperoxid, Cumolhydroperoxid, Pinenhydroperoxid, p-Menthan-hydroperoxid, t-Butylhydroperoxid, Acetylacetoneperoxid, Methylethylketoneperoxid, Bernsteinsäureperoxid, Dicetylperoxydicarbonat, t-Butylperoxyacetat, t-Butylperoxy-maleinsäure, t-Butylperoxybenzoat, Acetylcyclohexylsulfonylperoxid.

Bevorzugt werden als Radikalstarter wasserlösliche Azo-Verbindungen eingesetzt.

Besonders bevorzugt sind Azoinitiatoren wie ®VAZO 52, ®VAZO 64 (AIBN), ®VAZO 67, ®VAZO 88, ®VAZO 68 der Fa. Dupont-Biesteritz, V-70 2,2'-Azobis(4-methoxy-2,4-dimethyl valeronitril),V-65 2,2'-Azobis(2,4-dimethylvaleronitril)V-601 Dimethyl 2,2'-azobis(2-methylpropionat),V-59 2,2'-Azobis(2-methylbutyronitril),V-40, VF-096 1,1'-Azobis (cyclo-hexane-1-carbonitril),V-30 1-[(cyano-1-methylethyl)azo]formamid, VAm-110 2,2'-Azobis(N-butyl-2-methylpropionamid),VAm-111 2,2'-Azobis(N-cyclohexyl-2-methyl-propion-amid), VA-046B 2,2'-Azobis[2-(2-imidazolin-2-yl)propandisulfatedi-hydrate, VA-057 2,2'-Azobis[N-(2-carboxyethyl)-2-methylpropionamidin]tetrahydrat, VA-061 2,2'-Azobis [2-(2-imidazolin-2-yl)propan], VA-080 2,2'-Azobis{2-methyl-N-[1,1-bis(hydroxy-methyl)-2-hydroxyethyl] propionamid, VA-085 2,2'-Azobis{2-methyl-N-[2-(1-hydroxy-butyl)]propionamid}, VA-086 2,2'-Azobis[2-methyl-N-(2-hydroxyethyl)-propionamid] von Wako Chemicals.

Bevorzugt sind auch Azoinitiatoren wie 2-t-Butylazo-2-cyanopropan, Dimethylazodiisobutyrat, Azodiisobutyronitril, 2-t-Butylazo-1-cyanocyclohexan, 1-t-Amylazo-1-cyanocyclohexan. Weiterhin sind bevorzugt Alkylperketale wie 2,2-Bis-(t-butylperoxy)butan, Ethyl-3,3-bis(t-butylperoxy)butyrat, 1,1-Di-(t-butylperoxy)-cyclohexan.

Bevorzugt wird der Radikalinitiator in dem genannten Lösungsmittel eingesetzt. Bevorzugt werden auch cyclische Olefine wie Cyclopenten, Cyclohexen, Cyclohexenole, Cyclohexenone, Cyclohepten, Cyclohexenole, Cyclooocten,

Cyclooctenole oder Cyclooctenone eingesetzt.

Bevorzugt werden funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, $\alpha$-Methylstyrol, 4-Methylstyrol, Vinylacetat, 9-Vinylanthracen, 2-Vinylpyridin, 4-Vinylpyridin und 1-Vinyl-2-pyrrolidon eingesetzt.

Bevorzugt besteht die Atmosphäre bei der Umsetzung mit der $\alpha,\beta$-ungesättigten Carbonsäure zu 50 bis 99,9 Gew.-% aus Bestandteilen des Lösungsmittels und $\alpha,\beta$-ungesättigten Carbonsäure, bevorzugt zu 70-95 Gew.-%.

Bevorzugt besteht die Atmosphäre bei der Umsetzung mit dem Olefin zu 50 bis 99,9 Gew.-% aus Bestandteilen des Lösungsmittels und Olefin, bevorzugt zu 70 bis 95 Gew.-%.

Bevorzugt enthält die Atmosphäre gasförmige Komponenten, die nicht an der Reaktion teilnehmen. Bevorzugt handelt es sich bei den gasförmigen Komponenten um Sauerstoff, Stickstoff, Kohlendioxid, Edelgase, Wasserstoff und/oder Alkane.

Bevorzugt erfolgt die Umsetzung während des Zusatz des $\alpha,\beta$-ungesättigten Carbonsäurederivates bei einem Druck von 1 bis 50 bar, bevorzugt 1 bis 20 bar.

Bevorzugt erfährt die Reaktionslösung bei der Umsetzung der Komponente C mit den Komponenten D oder E eine Mischintensität, die einer Rotations-Reynolds-Zahl von 1 bis 1000000, bevorzugt von 100 bis 100000 entspricht.

Bevorzugt erfolgt eine intensive Durchmischung von Olefin, $\alpha,\beta$-ungesättigten Carbonsäuren, Radikalinitiator, Lösungsmittel und Hypophosphoriger Säure und/oder deren Salzen unter einem Energieeintrag von 0,083 bis 10 $kW/m^3$, bevorzugt 0,33-1,65 $kW/m^3$.

Bevorzugte Apparate sind Rührkessel, Rührkesselkaskaden, Strömungsrohre, Blasensäulen und Wäscher.

Der Eintrag von gasförmigen Olefinkomponenten erfolgt bevorzugt durch Düsen (z.B. Venturidüsen), Begasungsrührer, Turbinenrührer, Scheibenrührer.

Die Erfindung betrifft auch die Verwendung der halogenarmen Mono-Carboxylfunktionalisierten Dialkylphosphinsäure in ihrer Form der vorgenannten Mischungen als Flammschutzmittel bzw. als Zwischenstufe zur Herstellung von Flammschutzmitteln. Die Erfindung betrifft auch Flammschutzmittel, die halogenarme Mono-Carboxylfunktionalisierten Dialkylphosphinsäuren in ihrer Form der vorgenannten Mischungen enthalten.

Bevorzugte Additive zu den erfindungsgemäßen stabilisierten Flammschutzmitteln sind Antioxidantien wie aromatische Amine, sterisch gehinderte Phenole (Butyliertes Hydroxotoluol (BHT)), Thiobisphenol, höhermolekulare Polyphenole, Tetrakis(methylen[2,5-di-tert-butyl-4-hydroxyhydrocinnamat])methan (Irganox 1010), Octadecyl-3,5-di-tert-butyl-4-hydroxyhydrocinnamat (Irganox 1076), Organophosphite (Tris(nonylphenyl)phosphit (TNPP)), Thioester (Distearyl-3,3'-thiodipropionate, Di-tridecyl-3,3'-thiodipropionat, Dilauryl-3,3'-thiodipropionat), Metalldeaktivatoren (Irganox 1024), Vitamin E (alpha-Tocopherol), Lacton, Hydroxylamin.

Bevorzugte Additive zu den erfindungsgemäßen stabilisierten Flammschutzmitteln sind Antistatica wie Fettsäureester (Glycerin, Polyethylenglykolester, Sorbitolester), Quartärnäre Ammoniumverbindungen, Ethoxylierte Amine, Alkylsulfonate.

Bevorzugte Additive zu den erfindungsgemäßen stabilisierten Flammschutzmitteln sind Treibmittel wie Azodicarbonamid, p,p-Oxybis(benzolsulfonylhydrazid) (OBSH), 5-Phenyltetrazol (5PT), p-Toluolsulfonylsemicarbazid (TSSC), Trihydrazintriazin (THT).

Bevorzugte Additive zu den erfindungsgemäßen stabilisierten Flammschutzmitteln sind Flammschutzmittel wie Aluminiumtrihydrat, Antimonoxid, bromierte aromatische oder cycloaliphatische Kohlenwasserstoffe, Phenole, Ether, Chlorparaffin, Hexachlorocyclo-pentadien-Adducte (Dechloran Plus, Occidental Chemical Co), Roter Phosphor, Melaminderivate, Melamincyanurate, Ammoniumpolyphosphate, Magnesiumhydroxid.

Bevorzugte Additive zu den erfindungsgemäßen stabilisierten Flammschutzmitteln sind Hitzestabilisatoren wie Bleistabilisatoren Dibasisches Bleiphthalat, Dibasisches Bleistearat, Bleisilicat, Monobasisches und tribasisches Bleisulfat, Dibasisches Bleicarbonat, Dibasisches Bleiphosphit), Gemischt-Metall-Salze (Barium-Cadmium-Salze von, Barium-Zink-Salze und Calcium-Zink-Salze von 2-Ethylhexylcarbonsäure, Searinsäure, Ricinoleinsäure und/oder Laurinsäure bzw. substituierte Phenole, Organo-zinn-Stabilisatoren (Mono- und Dialkylzinnmercaptide, (Thioglycolate), Dialkylzinncarboxylate (Maleate, Laurate, Zinnester), Sekundäre Hitzestabilisatoren (Alkyl-/Arylorganophosphite, Epoxyverbindungen ungesättigter Fettsäuren und Fettsäureester).

Bevorzugte Additive zu den erfindungsgemäßen stabilisierten Flammschutzmitteln sind Schlagzähmodifikatoren/Prozesshilfsmittel wie Acrylate, Acryl-nitril-Butadien-Styrol (ABS), Chloriertes Polyethylen (CPE), Ethylen-Propylen Terpolymer (EPT), Ethalen-Vinylacetat (EVA), Methacrylat-Butadien-Styrol (MBS).

Bevorzugte Additive zu den erfindungsgemäßen stabilisierten Flammschutzmitteln sind Gleitmittel wie Fettsäureamide (Fettsäuremonoamide, Fettsäurebisamide, Oleamide, Erucamide, Ethylen-bis-stearamid (EBSA), Ethylen-bis-oleamid (EBSA)), Fettsäuren-/ Fettsäureester ($C_{16}$-$C_{18}$ (Palmfettsäure, Stearinsäure, Ölsäure)), Fettsäurealkohole (Cetylalkohol, Stearylalkohol), Wachse (Paraffinwachse, Polyethylenwachse), Metallstearate (Calciumstearat, Zinkstearat, Magnesiumstearat, Bariumstearat, Aluminiumstearat, Cadmiumstearat, Bleistearat). Bevorzugte Additive zu

den erfindungsgemäßen stabilisierten Flammschutzmitteln sind Lichtschutzmittel wie UV-Absorber (Alkylsubstituierte Hydroxybenzophenone z.B. 2-Hydroxy-4-Alkoxybenzophenone, Alkylsubstituierte Hydroxybenzothiazole z.B. 2-Hydroxy-3,5-dialkylbenzotriazole), UV-Quencher (Nickel- und Zink diethyldithiocarbamat, n-Butylamin-Nickel-2,2'-thiobis-(4-t-octylphenolat), Nickel-bis(3,5-di-t-butyl-4-hydroxybenzyl)phosphonsäure monoethylester), Radikalinhibitoren (Bis-(2,2',6,6'-tetramethyl-4-piperidyl)sebacat (HALS)), Hydroperoxidzersetzer (Dithiophosphate).

Bevorzugt sind weiterhin Antidrippingmittel, Compatibilizer, Füllstoffe, Verstärkungsstoffe, Keimbildungsmittel, Nukleierungsmittel, Additive zur Lasermarkierung, Hydrolysestabilisatoren, Kettenverlängerer, Farbpigmente, Weichmacher und Plastifizierungsmittel.

Insbesondere betrifft die Erfindung die Verwendung der erfindungsgemäßen Mono-Carboxylfunktionalisierten Dialkylphosphinsäuren als Flammschutzmittel bzw. als Zwischenstufe zur Herstellung von Flammschutzmitteln, für thermoplastische Polymere wie Polyester, Polystyrol oder Polyamid und für duroplastische Polymere wie ungesättigte Polyesterharze, Epoxidharze, Polyurethane oder Acrylate. Geeignete Polyester leiten sich von Dicarbonsäuren und Dialkoholen und/oder von Hydroxycarbonsäuren oder den entsprechenden Lactonen ab.

Bevorzugt werden als Dicarbonsäure-Komponenten oder deren Ester Terephthalsäure, Isophthalsäure, 5-Sulfoisophthalsäure, 5-Sulfopropoxyisophthalsäure, Naphthalin-2,6-dicarbonsäure, Diphenyl-p,p'-dicarbonsäure, Diphenoxyalkan-dicarbonsäuren, trans-Hexahydroterephthalsäure, Adipinsäure, Sebacinsäure oder 1,2-Cyclobutandicarbonsäure eingesetzt. Besonders bevorzugt wird Terephthalsäure eingesetzt.

Besonders bevorzugt wird Terephthalsäure als Hauptkomponente eingesetzt.

Bevorzugt beträgt die Summe der Dicarbonsäure-Cokomponenten maximal 10 Mol-% der gesamten Dicarbonsäure-Komponente.

Bevorzugt wird die Diol-Komponente rein oder als Cokomponente zu einem anderen Diol eingesetzt.

Bevorzugt werden als Diol-Komponenten Ethylenglykol, Propan-1,3-diol, Butan-1,3-diol und die höheren Homologe es Butan-1,3-diols, 2,2-Dimethylpropan-1,3-diol oder 1,4-Cyclohexandimethanol eingesetzt, besonders bevorzugt Ethylenglykol. Bevorzugt wird Ethylenglykol als Hauptkomponente eingesetzt. Bevorzugt beträgt die Summe der Diol-Cokomponenten maximal 10 Mol-% der gesamten Diolkomponente.

Geeignete Polyester sind Polyethylenterephthalat, Polybutylenterephthalat (Celanex 2500, Celanex 2002, Fa Celanese; Ultradur, Fa. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Synthetische lineare Polyester mit permanentem Flammschutz setzen sich aus Dicarbonsäure-Komponenten, Diol-Komponenten der erfindungsgemäße halogenarme Mono-Carboxylfunktionalisierten Dialkylphosphinsäure oder aus der nach dem erfindungsgemäßen Verfahren hergestellten Mono-Carboxylfunktionalisierten Dialkylphosphinsäure als Phosphor enthaltende Kettenglieder zusammen. Die Phosphor enthaltenden Kettenglieder machen 2-20 % der Dicarbonsäure-Komponente des Polyesters aus. Bevorzugt beträgt der resultierende Phosphorgehalt im Polyester 0,1-5%, besonders bevorzugt 0,5-3%.

Bevorzugt wird ausgehend von den freien Dicarbonsäure und Diolen zunächst direkt verestert und dann polykondensiert. Bevorzugt wird ausgehend von Dicarbonsäureestern, insbesondere Dimethylestern, zunächst umgeestert und dann unter Verwendung der hierfür üblichen Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt wird die erfindungsgemäße halogenarme Mono-Carboxylfunktionalisierte Dialkylphosphinsäure oder die nach dem erfindungsgemäßen Verfahren hergestellte Mono-Carboxylfunktionalisierte Dialkylphosphinsäure vor, während oder kurz vor Ende der Polykondensation zugegeben.

Bevorzugt findet die Veresterung bei Temperaturen von 100 - 300°C statt, besonders bevorzugt 150 - 250°C.

Bevorzugt findet die Polykondensation bei Drücken zwischen 0,1 bis 1,5 mbar und Temperaturen von 150 - 450°C statt, besonders bevorzugt 200 - 300°C.

Die erfindungsgemäß hergestellten, flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugtes Verfahren zur Herstellung von Fäden und Fasern ist das Verspinnen, Verstrecken und Nachbehandeln. Bevorzugte Verfahren zur Herstellung von Folien sind die Extrusion, das Verpressen, und das Spritzgießen.

Bevorzugt beträgt der resultierende Phosphorgehalt in aus flammgeschützten Polyester hergestellten Fäden und Fasern 0,1 - 18 %, bevorzugt 0,5-15 %.

Bevorzugt beträgt der resultierende Phosphorgehalt in aus flammgeschützten Polyester hergestellten Folien 0,2-15 %, bevorzugt 0,9-12 %.

Bevorzugt können die erfindungsgemäß flammgeschützten Polyester-Fäden in Einkomponentenfäden oder auch als eine Komponente in Bikomponentenfäden zusammen mit anderen Polymeren verwendet werden.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeigneten Polystyrolen um Pfropfcopolymere von Styrol oder alpha-Methylstyrol, wie z.B. Styrol auf Polybutadien, Styrol auf Polybutadien-Styrol- oder Polybutadien-Acrylnitrii-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4 (Poly-4-aminobuttersäure, ®Nylon 4, Fa. DuPont), Polyamid 4,6 (Poly(tetramethylenadipamid), Poly-(tetramethylen-adipinsäurediamid), ®Nylon 4/6, Fa. DuPont),Polyamid 6 (Polycaprolactam, Poly-6-aminohexansäure, ®Nylon 6, Fa. DuPont, ®Akulon K122, Fa. DSM; ®Zytel 7301, Fa. DuPont; ®Durethan B 29, Fa. Bayer), Polyamid 6,6 ((Poly (N,N'-hexamethyleneadipinediamid), ®Nylon 6/6 , Fa. DuPont , ®Zytel 101, Fa. DuPont; ®Durethan A30, ®Durethan AKV, ®Durethan AM, Fa. Bayer; ®Ultramid A3, Fa. BASF), Polyamid 6,9 (Poly(hexamethylen nonanediamid), ®Nylon 6/9 , Fa. DuPont), Polyamid 6,10 (Poly(hexamethylen sebacamid), ®Nylon 6/10, Fa. DuPont), Polyamid 6,12 (Poly (hexamethylene dodecanediamid), ®Nylon 6/12, Fa. DuPont), Polyamid 6,66 (Poly(hexamethylene adipamide-co-caprolactam),®Nylon 6/66, Fa. DuPont), Polyamid 7 (Poly-7-aminoheptansäure, ®Nylon 7, Fa. DuPont), Polyamid 7,7 (Polyheptamethylenpimelamid, ®Nylon 7,7, Fa. DuPont), Polyamid 8 (Poly-8-aminooctansäure, ®Nylon 8, Fa. DuPont), Polyamid 8,8 (Polyoctamethylensuberamid, ®Nylon 8,8, Fa. DuPont), Polyamid 9 (Poly-9-aminononansäure, ®Nylon 9, Fa. DuPont), Polyamid 9,9 (Polynonamethylenazelamid, ®Nylon 9,9, Fa. DuPont), Polyamid 10 (Poly-10-aminodecansäure, ®Nylon 10, Fa. DuPont), Polyamid 10,9 (Poly(decamethylenazelamid), ®Nylon 10,9, Fa. DuPont), Polyamid 10,10 (Polydecamethylensebacamid, ®Nylon 10,10, Fa. DuPont), Polyamid 11 (Poly-11-aminoundecansäure, ®Nylon 11, Fa. DuPont), Polyamid 12 (Polylauryllactam, ®Nylon 12 , Fa. DuPont, ®Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexa-methylenisophthalamid Polyhexamethylenterephthalamid) und gegebenenfalls einem Elastomer als Modifikator, z.B. Poly-2,4,4-trimethylhexamethylen-terephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die erfindungsgemäßen Mono-Carboxylfunktionalisierten Dialkylphosphinsäure werden bevorzugt in Formmassen angewendet, die weiter zur Erzeugung von Polymer-Formkörpern verwendet werden. Bevorzugtes Verfahren zur Herstellung von Polymer-Formkörpern ist das Spritzgießen.

Die Erfindung wird durch die nachstehenden Beispiele in nicht einschränkenderweise erläutert.

Beispiel 1 (Vergleich mit dem Stand der Technik)

Nach dem Stand der Technik (V.K. Chajrullin, R. R. Shagidullin, Z. Obschei. Khim. 36 (1966), S. 289-296) wurde aus 470 g Ethyldichlorphosphan im ersten Schritt das cyclische Anhydrid der 3-(Ethylhydroxyphosphinyl)-Propionsäure (Chlorgehalt 327 ppm) synthetisiert. Durch mehrfaches Rektifizieren mit einer Füllkörperkolonne (Raschigringe) wurde der Chlorgehalt auf 152 ppm reduziert. Dann wurde das Destillat wird mit Eiswasser hydrolysiert. Das überschüssige Wasser wurde abdestilliert und die entstandene 3-(Ethylhydroxyphosphinyl)-Propionsäure aus Aceton umkristallisiert. Es wurden 220 g (37 % der Theorie) 3-(Ethylhydroxyphosphinyl)-Propionsäure mit 120 ppm Chlorgehalt erhalten.

Beispiel 2

636 g (6 mol) Natriumhypophosphit-Monohydrat wurden in 860 g Wasser gelöst in einem Druckreaktor (Glasautoklaven) vorgelegt. Bei Normaldruck wurde innerhalb von 2h bei 65-80°C aus verschiedenen Vorlagen 432 g (6 mol) Acrylsäure und 73,4 g einer 7 %igen Wasserstoffperoxid-Lösung (2,5 Mol-% bzgl. Acrylsäure) zugetropft. Anschließend wurden bei 80-105°C über ein auf 3 bar eingestelltes Reduzierventil Ethylen bis zur Sättigung in den Reaktor eingeleitet.

Über einen Zeitraum von 6 h wurde unter ständigem Rühren (Energieeintrag von 0,8 $kW/m^3$) bei einem Ethylendruck von 2,5-2,9 bar und einer Temperatur von 80-105°C 73,4 g einer 7 %igen Wasserstoffperoxid-Lösung (2.5 Mol-% bzgl. Ethylen) gleichmäßig zudosiert.

Nach dem Entspannen wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 732 g (74 % der Theorie) 3-(Ethylhydroxyphosphinyl)-Propionsäure als farbloser Feststoff erhalten; Chlorgehalt: < 0,1 ppm.

Beispiel 3

Entsprechend Beispiel 2 wurden 636 g (6 mol) Natriumhypophosphit-Monohydrat gelöst in 860 g Wasser, zuerst mit 516 g (6 mol) Crotonsäure bei 75-90°C in Gegenwart von 73.4 g einer 7 %igen Wasserstoffperoxid-Lösung versetzt. Das resultierende Reaktionsgemisch wurde anschließend in Gegenwart von 73,4 g einer 7 %igen Wasserstoffperoxid-Lösung mit Ethylen umgesetzt. Nach entsprechender Aufarbeitung wurden 623 g (58 % der Theorie) 3-(Ethylhydroxyphosphinyl)-Buttersäure als farblosen Feststoff erhalten; Chlorgehalt: < 0,1 ppm.

Beispiel 4

Entsprechend Beispiel 2 wurden 636 g (6 mol) Natriumhypophosphit-Monohydrat gelöst in 860 g Wasser, zuerst mit 432 g (6 mol) Acrylsäure bei 65-80°C in Gegenwart von 428 g einer 5 %igen Natriumperoxodisulfat-Lösung (1.5 Mol-% bzgl. Acrylsäure) versetzt. Das resultierende Reaktionsgemisch wurde anschließend in Gegenwart von 428 g einer 5%igen Natriumperoxodisulfat-Lösung (1.5 Mol-% bzgl. Propylen) mit Propylen umgesetzt. Nach entsprechender Aufarbeitung wurden 655 g (61 % der Theorie) 3-(Propylhydroxyphosphinyl)-Propionsäure als farbloser Feststoff erhalten; Chlorgehalt: < 0,1 ppm.

Beispiel 5

Ein Gemisch von 792 g einer 50 %igen wässrigen Lösung von hypophosphoriger Säure (6 mol) und 300 g Essigsäure wurden in einem Druckreaktor (Glasautoklaven) vorgelegt. Nach Aufheizen der Reaktionsmischung auf 115°C wurde über ein auf 3 bar eingestelltes Reduzierventil Butylen bis zur Sättigung in den Reaktor eingeleitet. Über einen Zeitraum von 6 h wurde unter ständigem Rühren bei einem Butylendruck von 2,5-2.9 bar und einer Temperatur von 125-145°C 51.6 g einer 5 %igen, essigsauren Azoisobutyronitril AIBN Lösung (0.26 Mol-% bzgl. Butylen) gleichmäßig zudosiert. Nach Entspannen wurde bei Normaldruck innerhalb von 3h bei 90-100°C aus verschiedenen Vorlagen 432 g (6 mol) Acrylsäure und 51,6 g einer 5 %igen, essigsauren AIBN-Lösung (0,26 Mol-% bzgl. Acrylsäure) zugetropft. Dann wurde das aus Wasser und Essigsäure bestehende Lösungsmittel im Vakuum abdestilliert und der Rückstand aus Aceton/Dioxan (3:1) umkristallisiert. Es wurden 695 g (60 % der Theorie) 3-(Butylhydroxyphosphinyl)-Propionsäure als farbloser Feststoff erhalten; Chlorgehalt: < 0,1 ppm.

Beispiel 6

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2,5-2,9 bar und einer Temperatur von 100-130°C eine Lösung von 428,4 g einer 5 %igen Natriumperoxodisulfat-Lösung (1.5 Mol-% bzgl. Ethylen) gleichmäßig zudosiert. Nach Entspannen wurde bei Normaldruck innerhalb von 1 h bei 90-100°C aus verschiedenen Vorlagen 602 g (7 mol) Methacrylsäure und 500 g einer 5 %igen Natriumperoxodisulfat-Lösung (1,5 mol % bzgl. Methacrylsäure) zugetropft.

Dann wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 591 g (55 % der Theorie) 3-(Ethylhydroxyphos-phinyl)-2-methyl-Propionsäure als farbloser Feststoff erhalten; Chlorgehalt: < 0.1 ppm.

Beispiel 7

Entsprechend Beispiel 6 wurden 636 g (6 mol) Natriumhypophosphit-Monohydrat gelöst in 860 g Wasser, zuerst in Gegenwart von 428 g einer 5 %igen Natriumperoxodisulfat-Lösung (1,5 Mol-% bzgl. Ethylen) ethyliert und

dann mit 700.8 g (7 mol) Tiglinsäure in Gegenwart von 500 g einer 5 %igen Natriumperoxodisulfat-Lösung (1,5 Mol-% bzgl. Tiglinsäure) versetzt. Nach entsprechender Aufarbeitung wurden 579 g (50 % der Theorie) 3-(Ethylhydroxyphosphinyl)-2-methyl-Buttersäure als farbloser Feststoff erhalten; Chlorgehalt: < 0,1 ppm.

Beispiel 8

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 120°C wurde über ein auf 3 bar eingestelltes Reduzierventil 1-Hexen bis zur Sättigung in den Reaktor eingeleitet. Über einen Zeitraum von 1 h wurde unter ständigem Rühren (Energieeintrag von 1,1 kW/$m^3$) bei einem Hexendruck von 2.5-2.9 bar und einer Temperatur von 120-140°C 142.8 g einer 5 %igen Natriumperoxodisulfat-Lösung (1.5 Mol-% bzgl. 1-Hexen) gleichmäßig zudosiert. Nach Entspannen wurde bei Normaldruck innerhalb von 2h bei 90-100°C aus verschiedenen Vorlagen 432 g (6 mol) Acrylsäure und 428 g einer 5 %igen Natriumperoxodisulfat-Lösung (1,5 Mol-% bzgl. Acrylsäure) zugetropft. Nach Aufheizen der Reaktionsmischung auf 120°C wurde wieder über ein auf 3 bar eingestelltes Reduzierventil 1-Hexen bis zur Sättigung in den Reaktor eingeleitet. Über einen Zeitraum von 6 h wurde unter ständigem Rühren bei einem Hexendruck von 2,5-2,9 bar und einer Temperatur von 120-140°C 428 g einer 5 %igen Natriumperoxodisulfat-Lösung (1,5 Mol-% bzgl. 1-Hexen) gleichmäßig zudosiert.

Dann wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Amylalkohol/Aceton (2:1) umkristallisiert. Es wurden 769 g (60 % der Theorie) 3-(Hexylhydroxyphosphinyl)-Propionsäure als farbloser Feststoff erhalten; Chlorgehalt: < 0,1 ppm.

Beispiel 9

Analog zu Beispiel 8 wurden 636 g (6 mol) Natriumhypophosphit-Monohydrat und 15 g konzentrierte Schwefelsäure in 860 g Wasser gelöst. Das Gemische wurde zuerst innerhalb von 2 h in Gegenwart von 214 g einer 5 %igen Natriumperoxodisulfat-Lösung (1.5 Mol-% bzgl. Propylen) mit Propylen umgesetzt. Dann wurde es mit 516.5 g (6 mol) Acrylsäuremethylester in Gegenwart von 428 g einer 5 %igen Natriumperoxodisulfat-Lösung (1,5 Mol-% bzgl. Acrylsäuremethylester) versetzt, bevor nochmals Propylen in Gegenwart von 214 g einer 5 %igen Natriumperoxodisulfat-Lösung zugegeben wurde.

Die resultierende wässrige Lösung ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert und das Lösungsmittel des Filtrats im Vakuum abgetrennt. Zur Hydrolyse des Esters wurde der Rückstand auf 150°C erhitzt, bevor innerhalb von 3 h 450 g (25 mol) Wasser zugetropft wurde. Anschließend wurde das Wasser und leicht flüchtige Bestandteile im Vakuum abgetrennt und der Rückstand aus Aceton/Dioxan (4:1) umkristallisiert. Es wurden 634 g (59 % der Theorie) 3-(Propylhydroxyphosphinyl)-Propionsäure als farbloser Feststoff erhalten; Chlorgehalt: < 0,1 ppm.

Beispiel 10

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2,5-2,9 bar und einer Temperatur von 100-130°C 428,4 g einer 5%igen Natriumperoxodisulfat-Lösung (1.5 Mol-% bzgl. Ethylen) gleichmäßig zudosiert. Nach Entspannen wurde bei Normaldruck innerhalb von 1 h bei 90-100°C aus verschiedenen Vorlagen 216 g (3 mol) Acrylsäure und 214,2 g einer 5 %igen Natriumperoxodisulfat-Lösung (1,5 Mol-% bzgl. Acrylsäure) zugetropft.

Die beiden Schritte wurden bei entsprechenden Temperaturen wiederholt, in dem wieder ein Ethylendruck von 2,5-2,9 bar eingestellt wurde und für 2h nun 214,2 g einer 5 %igen Natriumperoxodisulfat-Lösung dosiert wurden. Danach wurde das Reaktionsgemisch wieder mit 216 g (3 mol) Acrylsäure in Gegenwart von 214,2 g einer 5 %igen Natriumperoxodisulfat-Lösung versetzt.

Dann wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 752 g (76 % der Theorie) 3-(Ethylhydroxyphos-phinyl)-Propionsäure als farbloser Feststoff erhalten; Chlorgehalt: < 0,1 ppm.

Beispiel 11

636 g (6 mol) Natriumhypophosphit-Monohydrat und 15g konzentrierte Schwefelsäure wurden in 860 g Wasser gelöst in einem Druckreaktor (Glasautoklaven) vorgelegt. Bei Normaldruck wurden innerhalb von 1 h bei 75-90°C aus verschiedenen Vorlagen 216 g (3 mol) Acrylsäure und 36,5 g einer 7 %igen Wasserstoffperoxid-Lösung (2,5 Mol-% bzgl. Acrylsäure) zugetropft. Anschließend wurden bei 80-105°C über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2,5-2,9 bar und einer Temperatur von 80-105°C 73 g einer 7 %igen Wasserstoffperoxid-Lösung (2,5 Mol-% bzgl. Ethylen) gleichmäßig zudosiert. Nach dem Entspannen wurden wiederum innerhalb von 1 h bei 75-90°C aus verschiedenen Vorlagen 216 g (3 mol) Acrylsäure und 36,5 g einer 7 %igen Wasserstoffperoxid-Lösung (2,5 Mol-% bzgl. Acrylsäure) zugetropft. Dann wurde das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 772 g (78 % der Theorie) 3-(Ethylhydroxyphosphinyl)-Propionsäure als farbloser Feststoff erhalten; Chlorgehalt: < 0,1 ppm.

Beispiel 12

Ein Gemisch von 792 g einer 50 %igen wässrigen Lösung von hypophosphorigen Säure (6 mol) und 300 g Essigsäure wurden in einem Druckreaktor (Glasautoklaven) vorgelegt. Nach Aufheizen der Reaktionsmischung auf 115°C wurde über ein auf 3 bar eingestelltes Reduzierventil Ethylen bis zur Sättigung in den Reaktor eingeleitet. Über einen Zeitraum von 2 h wurde unter ständigem Rühren bei einem Ethylendruck von 2,5-2,9 bar und einer Temperatur von 120-140°C 49,3 g einer 5 %igen, essigsauren Azoisobutyronitril AIBN Lösung (0,5 Mol-% bzgl. Ethylen) gleichmäßig zudosiert. Nach Entspannen wurde bei Normaldruck innerhalb von 1 h bei 90-110°C aus verschiedenen Vorlagen 258,3 g (3 mol) Acrylsäuremethylester und 49,3 g einer 5 %igen, essigsauren AIBN-Lösung (0,5 Mol-% bzgl. Acrylsäuremethylester) zugetropft.

Abwechselnd wurden entsprechend folgende Mengen zudosiert:

in Gegenwart von Ethylen 29,6 g 5 %ige, essigsaure AIBN-Lösung,
155 g Acrylsäuremethylester und 29,6 g 5 %ige, essigsaure AIBN-Lösung,
in Gegenwart von Ethylen 19,7 g 5 %ige, essigsaure AIBN-Lösung,
103,3 g Acrylsäuremethylester und 19,7 g 5 %ige, essigsaure AIBN-Lösung,
in Gegenwart von Ethylen 29,6 g 5 %ige, essigsaure AIBN-Lösung.

Dann wurde das aus Wasser und Essigsäure bestehende Lösungsmittel im Vakuum abdestilliert. Zur Hydrolyse des Esters wurde der Rückstand wurde auf 150°C erhitzt, bevor innerhalb von 3 h 450 g (25 mol) Wasser zugetropft wurden. Anschließend wurde das Wasser im Vakuum abgetrennt und der Rückstand aus Aceton umkristallisiert. Es wurden 743 g (75 % der Theorie) 3-(Ethylhydroxyphosphinyl)-Propionsäure als farbloser Feststoff erhalten; Chlorgehalt: < 0,1 ppm.

Beispiel 13

1. Ethylierung

636 g (6 mol) Natriumhypophosphit-Monohydrat wurden in 860 g Wasser gelöst in einem Druckreaktor (Glasautoklaven) vorgelegt. Nach Aufheizen der Reaktionsmischung auf 100°C wurde über ein auf 3 bar eingestelltes Reduzierventil Ethylen bis zur Sättigung in den Reaktor eingeleitet. Über einen Zeitraum von 4 h wurde unter ständigem Rühren bei einem Ethylendruck von 2,5-2,9 bar und einer Temperatur von 100-130°C 428,4 g einer 5 %igen Natriumperoxodisulfat-Lösung (1,5 Mol-% bzgl. Ethylen) gleichmäßig zudosiert.

2. Veresterung

Die wässrige Reaktionslösung mit ca. 5 g konzentrierter Schwefelsäure sauer gestellt und das Wasser im Vakuum abdestilliert. Der Rückstand wurde in 700 g Butanol aufgenommen und extrahiert. Die unlöslichen Salze wurden abfiltriert. Das Filtrat wurde mit weiteren 1530 g Butanol versetzt und bei Normaldruck unter Wasserabscheiderbedingungen erhitzt. Nach beendeter Veresterung wurde das Butanol im Vakuum abgetrennt und der Rückstand im Vakuum über eine Vigreux-Kolonne destilliert. Es wurden 586 g (65 % der Theorie) Ethanphosphonigsäure-n-butylester als farblose Flüssigkeit erhalten.

3. Acrylsäure-Addition

In einem 1l Fünfhalskolben mit Thermometer, Rückflusskühler, Intensivrührer und Tropftrichter wurden 450 g (3 mol) nach oben stehenden Verfahren erhaltener Ethanphosphonigsäure-n-butylester und 385 g (3 mol) Acrylsäure-n-butylester vorgelegt. Unter Rühren wurden 15 ml Natriumbutylat (30 %) in einer solchen Geschwindigkeit dazugetropft, dass sich eine Reaktionstemperatur von max. 120°C einstellt. Anschließend wurde noch 20 min bei 80°C unter Rühren erhitzt. Das so erhaltene Rohprodukt wurde im Vakuum destilliert. Es wurden 751 g (90 % der Theorie) 3-(Ethyl-n-butoxy-phosphinyl)-Propionsäure-butyl-ester als farblose Flüssigkeit erhalten.

4. Hydrolyse

556 g (2 mol) des erhaltenen 3-(Ethyl-n-butoxy-phosphinyl)-Propionsäure-butyl-ester wurden in einem 1 l Fünfhalskolben mit Thermometer, Rückflusskühler, Intensivrührer und Tropftrichter vorgelegt. Bei 160°C wurde während 4 h 500 ml Wasser eindosiert und eine Butanol-Wasser Mischung abdestilliert. (Das abdestillierte Butanol wurde wieder zur Veresterung der ethylphosphonigen Säure verwendet.) Der feste Rückstand wurde aus Aceton umkristallisiert. Es wurden 305 g (92 % der Theorie) 3-(Ethylhydroxy-phosphinyl)-Propionsäure als farbloser Feststoff erhalten; Chlorgehalt: < 0,1 ppm.

Beispiel 14

792 g einer 50 %igen wässrigen Lösung von hypophosphoriger Säure (6 mol) wurden mit 261 g (4,5 mol) Aceton und 588 g (3 mol) 50 %ige Schwefelsäure versetzt und das Reaktionsgemisch 8 h unter Rückfluss erhitzt. Nach Abkühlen wurde das Reaktionsgemisch unter Eiskühlung mit Natronlauge neutralisiert und das Lösungsmittel im Vakuum abdestilliert. Der Rückstand wurde mit Ethanol aufgenommen und die unlöslichen Salze abfiltriert. Das Lösungsmittel des Filtrats wurde im Vakuum entfernt. Es wurden 677 g (91 % der Theorie) 1-Hydroxy-1-methylethylphosphinat erhalten.

Beispiel 15

744 g (6 mol) 1-Hydroxy-1-methylethylphosphinat wurden gelöst in 840 ml Wasser vorgelegt, bevor innerhalb von 2,5 h bei 95-100°C aus verschiedenen Vorlage 432 g (6 mol) Acrylsäure und 428 g einer 5 %igen Natriumperoxodisulfat-Lösung (1.5 Mol-% bzgl. Acrylsäure) zugetropft wurde. Anschließend wurde das Wasser im Vakuum abdestilliert. Das Aceton wurde im Vakuum bei 120-160°C thermolytisch abgespalten und in einer Kühlfalle aufgefangen. Das im Sumpf befindlichen Produkt wurde mit 800 ml Wasser aufgenommen. In einem Druckreaktor wurde das Reaktionsgemisch auf 115°C aufgeheizt und dann über ein auf 3 bar eingestelltes Reduzierventil Ethylen bis zur Sättigung in den Reaktor eingeleitet. Über einen Zeitraum von 5 h wurde unter ständigem Rühren bei einem Ethylendruck von 2,5-2,9 bar und einer Temperatur von 100-115°C 428 g einer 5 %igen Natriumperoxodisulfat-Lösung (1,5 Mol-% bzgl. Ethylen) gleichmäßig zudosiert.

Dann wurde die wässrige Lösung mit ca. 5 g konzentrierter Schwefelsäure sauer gestellt und das Wasser im Vakuum abdestilliert. Der Rückstand wurde in Tetrahydrofuran aufgenommen und extrahiert. Die unlöslichen Salze wurden abfiltriert. Das Lösungsmittel des Filtrats wurde im Vakuum abgetrennt und der Rückstand aus Aceton umkristallisiert. Es wurden 717 g (72 % der Theorie) 3-(Ethylhydroxyphosphinyl)-Propionsäure als farbloser Feststoff erhalten; Chlorgehalt: < 0.1 ppm.

Beispiel 16 (Korrosionstest mit Produkt aus Beispiel 1)

Das aus Beispiel 1 vor der Destillation erhaltene cyclische Anhydrid der 3-(Ethylhydroxyphosphinyl)-Propionsäure wurde mit Eiswasser hydrolisiert. Das Wasser wurde abdestilliert und der Rückstand mit Glykol im Verhältnis 1:2 Teilen gemischt. Der Volleintauchtest ergab mit 1,4571-Stahl bei 230°C einen Abtrag durch Korrosion von 0,34 mm/a.

Beispiel 17 (Korrosionstest mit Produkt aus Beispiel 2)

Die aus Beispiel 2 erhaltene 3-(Ethylhydroxyphosphinyl)-Propionsäure wurde mit Glykol im Verhältnis 1:2 Teilen gemischt. Der Volleintauchtest ergab 1,4571-Stahl bei 230°C einen Abtrag durch Korrosion von < 0,01 mm/a.

Diese Korrosionsrate ist erheblich vorteilhafter als in Beispiel 16. Der Korrosionstest liefert eine Aussage über die Verträglichkeit des Flammschutzmittels bei der Verarbeitung von Flammschutzmitteln, Flammgeschützten Polymerformmassen und/oder flammgeschützten Polymerformkörpern.

## Patentansprüche

**1.** Verfahren zur Herstellung von Mischungen aus Dialkylphosphinsäuren und weiteren Komponenten, enthaltend

A) 98 bis 100 Gew.-% Mono-Carboxylfunktionalisierte Dialkylphosphinsäuren der Formel (I)

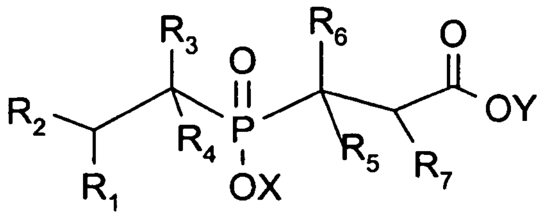

(I)

in der $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, n-Butyl, Isobutyl, tert. Butyl und/oder Phenyl bedeuten
X, Y gleich oder verschieden sind und unabhängig voneinander H, Li, Na, K oder $NH_4$ bedeuten, und
B) 0 bis 2 Gew.-% Halogene,
wobei die Summe der Komponenten immer 100 Gew.-% beträgt, **dadurch gekennzeichnet, dass** man hypophosphorige Säure oder deren Salze (Komponente C) der Formel II

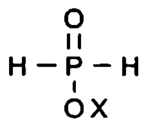

II

in der X H, Na, K oder $NH_4$ bedeutet in Gegenwart eines radikalischen Initiators mit einem $\alpha,\beta$-ungesättigten Carbonsäure-Derivat (Komponente D) der Formel III,

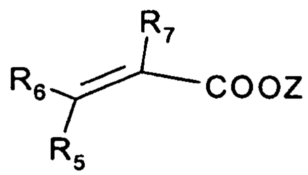

III

in der $R_5$, $R_6$, $R_7$ die gleiche Bedeutung wie in Formel I aufweisen und Z H, $C_{1-18}$-Alkyl oder $C_{6-18}$-Aryl bedeutet oder für Y steht, und mit einem Olefin (Komponente E) der Formel IV

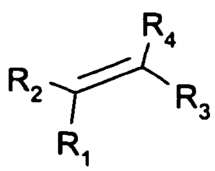

IV

in der $R_1$, $R_2$, $R_3$, $R_4$ die gleiche Bedeutung wie in Formel I aufweisen, umsetzt, wobei die Komponenten D und

E nicht gleichzeitig sondern jeweils separat (hintereinander oder nacheinander) dosiert werden.

2. Verfahren nach Anspruch 1, **dadurch gekennzeichnet, dass** $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, n-Butyl, Isobutyl, tert.-Butyl und/oder Phenyl bedeuten.

3. Verfahren nach Anspruch 1 oder 2, **dadurch gekennzeichnet, dass** X H und Z H, Methyl, Ethyl, n-Propyl, Isopropyl, n-Butyl, Isobutyl, tert.-Butyl, Hydroxyethyl oder Hydroxypropyl bedeutet.

4. Verfahren nach einem oder mehreren der Ansprüche 1 bis 3, **dadurch gekennzeichnet, dass** in einem Schritt 1 die Komponente C in Gegenwart eines radikalischen Initiators mit Komponente E zu einer Alkylphosphonigen Säure umgesetzt wird und in Schritt 2 die resultierende Reaktionslösung mit einem Alkohol verestert wird und dabei entstehende Phosphonigsäureester destillativ abgetrennt wird und dann in einem Schritt 3 in Gegenwart eines radikalischen oder eines basischen Initiators mit Komponente D umgesetzt wird, wobei anschließend die resultierende Reaktionslösung in einem Schritt 4 unter saurer Katalyse hydrolisiert wird, um so die Komponente A (Mono-Carboxylfunktionalisierte Dialkylphosphinsäure) zu erhalten.

5. Verfahren nach Anspruch 4, **dadurch gekennzeichnet, dass** im Schritt 2 die alkylphosphonige Säure mit einem linearen oder verzweigten Alkohol der allgemeinen Formel M-OH, wobei M für einen linearen oder verzweigten Alkylrest mit 1 bis 10 Kohlenstoffatomen steht, direkt verestert wird.

6. Verfahren nach Anspruch 5, **dadurch gekennzeichnet, dass** es sich bei dem Alkohol um n-Butanol, Iso-Butanol oder Ethylhexanol handelt.

7. Verfahren nach einem oder mehreren der Ansprüche 4 bis 6, **dadurch gekennzeichnet, dass** es sich bei der Komponente C um das Ammonium- oder Natriumsalz der hypophosphorigen Säure handelt.

8. Verfahren nach einem oder mehreren der Ansprüche 1 bis 7, **dadurch gekennzeichnet, dass** es sich bei dem Initiator um Peroxide bildende Verbindungen und/oder Peroxoverbindungen wie Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azoverbindungen wie Azodiisobutyronitril, 2,2-Azobis(2-amidinopropan)-dihydrochlorid und/oder 2,2'-Azobis(N,N'-dimethylen-isobutyramidin)-dihydrochlorid handelt.

9. Verfahren nach einem oder mehreren der Ansprüche 1 bis 8, **dadurch gekennzeichnet, dass** es sich bei den $\alpha$, $\beta$-ungesättigten Carbonsäuren um Acrylsäure, Acryl-säuremethylester, Acrylsäureethylester, Methacrylsäure, Acrylsäurehydroxy-ethylester, Crotonsäure, Crotonsäureethylester, Tiglinsäure (trans 2,3-Dimethylacryl-säure), (trans-) 2-Pentensäure, Furan-2-carbonsäure und/oder Thiophen-2-carbonsäure handelt.

10. Verfahren nach einem oder mehreren der Ansprüche 1 bis 9, **dadurch gekennzeichnet, dass** es sich bei dem Olefin um Ethylen, Propylen, n-Buten und/oder i-Buten oder beliebige Gemische davon, 1-Hexen, 1-Hepten und/oder 1-Octen; Allylalkohol, Allylamin, Allylbenzol, Allylanisol, Styrol, $\alpha$-Methylstyrol, 4-Methylstyrol und/oder Vinylacetat handelt.

11. Verfahren nach einem oder mehreren der Ansprüche 1 bis 10, **dadurch gekennzeichnet, dass** die Umsetzung der Komponente C mit den Komponenten D und/oder E bei einer Temperatur von 50 bis 150°C erfolgt.

12. Verfahren nach einem oder mehreren der Ansprüche 1 bis 11, **dadurch gekennzeichnet, dass** es sich bei der Mono-Carboxylfunktionalisierten Dialkylphosphinsäure um 3-(Ethylhydroxyphosphinyl)-propionsäure, 3-(Propylhydroxy-phosphinyl)-propionsäure, 3-(Ethylhydroxyphosphinyl)-Buttersäure, 3-(Ethylhydroxy-phosphinyl)-2-methyl-Propionsäure, 3-(Butylhydroxyphosphinyl)-Propionsäure, 3-(Propylhydroxy-phosphinyl)-Buttersäure, 3-(Butylhydroxy-phosphinyl)-Buttersäure, 3-(Ethylhydroxy-phosphinyl)-Pentansäure, 3-(Propylhydroxy-phosphinyl)-Pentansäure, 3-(Butylhydroxy-phosphinyl)-Pentansäure, 3-(Propylhydroxy-phosphinyl)-2-methyl-Propionsäure, 3-(Butylhydroxy-phosphinyl)-2-methyl-Propionsäure, 3-(Ethylhydroxy-phosphinyl)-2-methyl-Buttersäure, 3-(Propylhydroxy-phosphinyl)-2-methyl-Buttersäure und/oder 3-(Butylhydroxy-phosphinyl)-2-methyl-Buttersäure handelt.

13. Verfahren zur Herstellung von Mischungen aus Dialkylphosphinsäuren und weiteren Komponenten, enthaltend

A) 98 bis 100 Gew.-% Mono-Carboxylfunktionalisierte Dialkylphosphinsäuren der Formel (I)

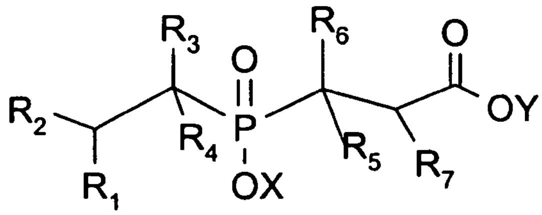

(I)

in der $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, n-Butyl, Isobutyl, tert. Butyl und/oder Phenyl bedeuten
X, Y gleich oder verschieden sind und unabhängig voneinander H, Li, Na, K oder $NH_4$
bedeuten, und
B) 0 bis 2 Gew.-% Halogene,
wobei die Summe der Komponenten immer 100 Gew.-% beträgt, **dadurch gekennzeichnet, dass** man hypophosphorige Säure oder deren Salze (Komponente C) der Formel II

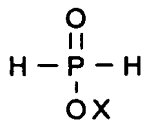

II

in der X H, Na, K oder $NH_4$ bedeutet, in einem Schritt 1 mit Aceton zu 1-Hydroxy-1-dialkylphosphinat umsetzt, in einem Schritt 2 dieses 1-Hydroxy-1-dialkylphosphinat in Gegenwart eines radikalischen Initiators mit einem $\alpha,\beta$-ungesättigten Carbonsäure-Derivat (Komponente D) der Formel III,

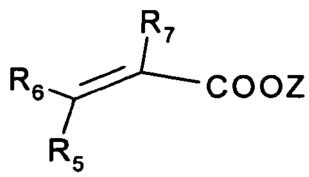

III

in der $R_5$, $R_6$, $R_7$ die gleiche Bedeutung wie in Formel I aufweisen und Z H, $C_{1-18}$-Alkyl oder $C_{6-18}$-Aryl bedeutet oder für Y steht, umsetzt, dann in einem Schritt 3 das Aceton abtrennt und in einem Schritt 4 das resultierende Reaktionsgemisch in Gegenwart eines radikalischen Initiators mit einem Olefin (Komponente E) der Formel IV

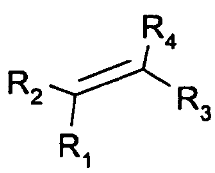

IV

in der $R_1$, $R_2$, $R_3$, $R_4$ die gleiche Bedeutung wie in Formel I aufweisen, umsetzt.

**14.** Verfahren zur Herstellung von Mischungen aus Dialkylphosphinsäuren und weiteren Komponenten, enthaltend

A) 98 bis 100 Gew.-% Mono-Carboxylfunktionalisierte Dialkylphosphinsäuren der Formel (I)

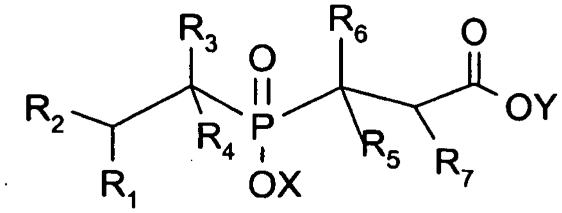

(I)

in der $R_1$, $R_2$, $R_3$, $R_4$, $R_5$, $R_6$, $R_7$ gleich oder verschieden sind und unabhängig voneinander H, Methyl, Ethyl, n-Propyl, Isopropyl, n-Butyl, Isobutyl, tert. Butyl und/oder Phenyl bedeuten
X, Y gleich oder verschieden sind und unabhängig voneinander H, Li, Na, K oder $NH_4$
bedeuten, und
B) 0 bis 2 Gew.-% Halogene,
wobei die Summe der Komponenten immer 100 Gew.-% beträgt, **dadurch gekennzeichnet, dass** man die hypophosphorige Säure oder deren Salze (Komponente C) der Formel II

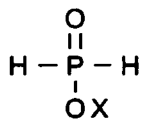

II

in der X H, Na, K oder $NH_4$ bedeutet, in einem Schritt 1 mit Aceton zu 1-Hydroxy-1-methylethylphosphinat umsetzt, in einem Schritt 2 dieses 1-Hydroxy-1-methylethylphosphinat in Gegenwart eines radikalischen Initiators mit einem Olefin (Komponente E) der Formel IV

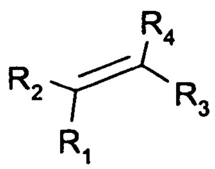

IV

in der $R_1$, $R_2$, $R_3$, $R_4$ die gleiche Bedeutung wie in Formel I aufweisen, umsetzt, dann in einem Schritt 3 das Aceton abtrennt und in einem Schritt 4 das resultierende Reaktionsgemisch in Gegenwart eines radikalischen Initiators mit der einem $\alpha,\beta$-ungesättigten Carbonsäure-Derivat (Komponente D) der Formel III,

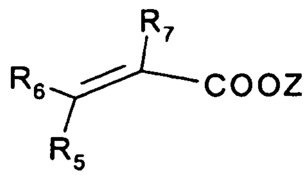

III

in der $R_5$, $R_6$, $R_7$ die gleiche Bedeutung wie in Formel I aufweisen und Z H, $C_{1-18}$-Alkyl oder $C_{6-18}$-Aryl bedeutet oder für Y steht, umsetzt.

## Claims

**1.** A process for the preparation of mixtures composed of dialkylphosphinic acids and of further components, comprising

A) from 98 to 100% by weight of monocarboxy-functionalized dialkylphosphinic acids of the formula (I)

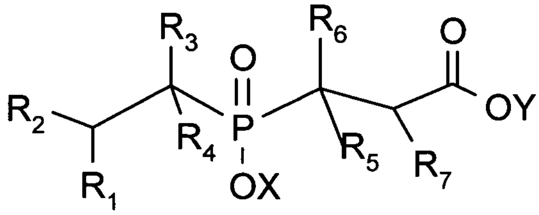

(I)

in which $R_1$, $R_2$, $R_3$, $R_4$, $R_5$, $R_6$, and $R_7$ are identical or different and, independently of one another, are H, methyl, ethyl, n-propyl, isopropyl, n-butyl, isobutyl, tert-butyl, and/or phenyl,
X and Y are identical or different and, independently of one another, are H, Li, Na, K, or $NH_4$,
and
B) from 0 to 2% by weight of halogens,
where the entirety of the components always amounts to 100% by weight, which comprises reacting hypophosphorous acid or its salts (component C) of the formula II

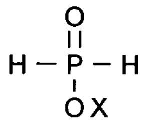

II

in which X is H, Na, K, or $NH_4$ in the presence of a free-radical initiator with an $\alpha,\beta$-unsaturated carboxylic acid derivative (component D) of the formula III,

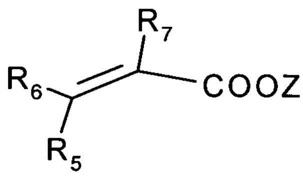

III

in which $R_5$, $R_6$, and $R_7$ are defined as in formula I, and Z is H, $C_{1-18}$-alkyl, or $C_{6-18}$-aryl, or is Y, and with an olefin (component E) of the formula IV

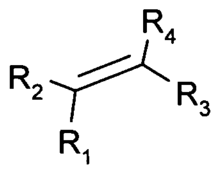

IV

in which $R_1$, $R_2$, $R_3$, and $R_4$ are defined as in formula I, where components D and E are respectively fed separately (in series or in sequence) rather than simultaneously.

2. The process as claimed in claim 1, wherein $R_1$, $R_2$, $R_3$, $R_4$, $R_5$, $R_6$, and $R_7$ are identical or different and, independently of one another, are H, methyl, ethyl, n-propyl, isopropyl, n-butyl, isobutyl, tert-butyl, and/or phenyl.

3. The process as claimed in claim 1 or 2, wherein X is H and Z is H, methyl, ethyl, n-propyl, isopropyl, n-butyl, isobutyl, tert-butyl, hydroxyethyl, or hydroxypropyl.

4. The process as claimed in one or more of claims 1 to 3, wherein, in a step 1, component C is reacted in the presence of a free-radical initiator with component E to give an alkylphosphonous acid and, in step 2, the resultant reaction solution is esterified with an alcohol and phosphonous ester produced here is removed by distillation and then, in a step 3, is reacted in the presence of a free-radical initiator or of a basic initiator with component D, and then the resultant reaction solution here is hydrolyzed, in a step 4, with acidic catalysis, in order to obtain component A (monocarboxy-functionalized dialkylphosphinic acid).

5. The process as claimed in claim 4, wherein, in step 2, the alkylphosphonous acid is directly esterified with a linear or branched alcohol of the formula M-OH, where M is a linear or branched alkyl radical having from 1 to 10 carbon atoms.

6. The process as claimed in claim 5, wherein the alcohol is n-butanol, isobutanol, or ethylhexanol.

7. The process as claimed in one or more of clams 4 to 6, wherein component C is the ammonium or sodium salt of hypophosphorous acid.

8. The process as claimed in one or more of claims 1 to 7, wherein the initiator is peroxide-forming compounds and/or peroxo compounds, e.g. hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-tert-butyl peroxide, and/or peroxodisulfuric acid, and/or is azo compounds, e.g. azodiisobutyronitrile, 2,2-azobis (2-amidinopropane) dihydrochloride and/or 2,2'-azobis(N,N'-dimethyleneisobutyramidine) dihydrochloride.

9. The process as claimed in one or more of claims 1 to 8, wherein the α,β-unsaturated carboxylic acids are acrylic acid, methyl acrylate, ethyl acrylate, methacrylic acid, hydroxyethyl acrylate, crotonic acid, ethyl crotonate, tiglic acid (trans-2,3-dimethylacrylic acid), (trans-)2-pentenoic acid, furan-2-carboxylic acid, and/or thiophene-2-carboxylic acid.

10. The process as claimed in one or more of claims 1 to 9, wherein the olefin is ethylene, propylene, n-butene, and/or isobutene, or any desired mixture thereof, 1-hexene, 1-heptene, and/or 1-octene; allyl alcohol, allylamine, allylbenzene, allylanisole, styrene, α-methylstyrene, 4-methylstyrene, and/or vinyl acetate.

11. The process as claimed in one or more of claims 1 to 10, wherein the reaction of component C with components D and/or E takes place at a temperature of from 50 to 150°C.

12. The process as claimed in one or more of claims 1 to 11, wherein the monocarboxy-functionalized dialkylphosphinic acid is 3-(ethylhydroxyphosphinyl)-propionic acid, 3-(propylhydroxyphosphinyl)propionic acid, 3-(ethylhydroxyphosphinyl)butyric acid, 3-(ethylhydroxyphosphinyl)-2-methylpropionic acid, 3-(butylhydroxyphosphinyl)-propionic acid, 3-(propylhydroxyphosphinyl)butyric acid, 3-(butylhydroxyphosphinyl)butyric acid, 3-(ethylhydroxyphosphinyl)pentanoic acid, 3-(propylhydroxyphosphinyl)pentanoic acid, 3-(butylhydroxyphosphinyl)pentanoic acid, 3-(propylhydroxyphosphinyl)-2-methylpropionic acid, 3-(butylhydroxyphosphinyl)-2-methylpropionic acid, 3-(ethylhydroxyphosphinyl)-2-methylbutyric acid, 3-(propylhydroxyphosphinyl)-2-methylbutyric acid, and/or 3-(butylhydroxyphosphinyl)-2-methylbutyric acid.

**13.** A process for the preparation of mixtures composed of dialkylphosphinic acids and of further components, comprising

A) from 98 to 100% by weight of monocarboxy-functionalized dialkylphosphinic acids of the formula (I)

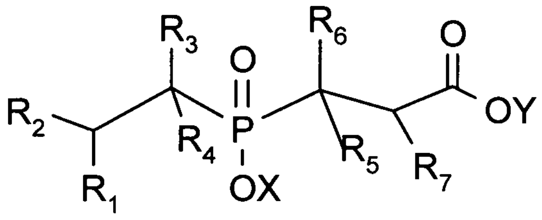

(I)

in which $R_1$, $R_2$, $R_3$, $R_4$, $R_5$, $R_6$, and $R_7$ are identical or different and, independently of one another, are H, methyl, ethyl, n-propyl, isopropyl, n-butyl, isobutyl, tert-butyl, and/or phenyl,
X and Y are identical or different and, independently of one another, are H, Li, Na, K, or $NH_4$,
and
B) from 0 to 2% by weight of halogens,
where the entirety of the components always amounts to 100% by weight, which comprises reacting hypophosphorous acid or its salts (component C) of the formula II

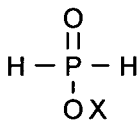

II

in which X is H, Na, K, or $NH_4$, in step 1, with acetone to give 1-hydroxy-1-dialkylphosphinate, in a step 2 reacting this 1-hydroxy-1-dialkylphosphinate in the presence of a free-radical initiator with an $\alpha,\beta$-unsaturated carboxylic acid derivative (component D) of the formula III,

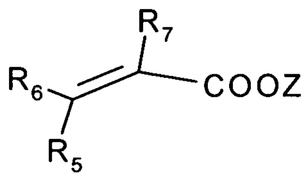

III

in which $R_5$, $R_6$, and $R_7$ are defined as in formula I, and Z is H, $C_{1-18}$-alkyl, or $C_{6-18}$-aryl, or is Y, and then, in a step 3, removing the acetone and, in a step 4, reacting the resultant reaction mixture in the presence of a free-radical initiator with an olefin (component E) of the formula IV

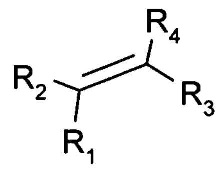

IV

in which $R_1$, $R_2$, $R_3$, and $R_4$ are defined as in formula I.

**14.** A process for the preparation of mixtures composed of dialkylphosphinic acids and of further components, comprising

A) from 98 to 100% by weight of monocarboxy-functionalized dialkylphosphinic acids of the formula (I)

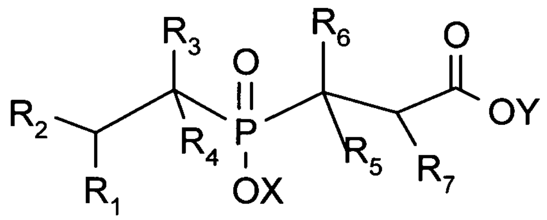

(I)

in which $R_1$, $R_2$, $R_3$, $R_4$, $R_5$, $R_6$, and $R_7$ are identical or different and, independently of one another, are H, methyl, ethyl, n-propyl, isopropyl, n-butyl, isobutyl, tert-butyl, and/or phenyl,
X and Y are identical or different and, independently of one another, are H, Li, Na, K, or $NH_4$,
and
B) from 0 to 2% by weight of halogens,
where the entirety of the components always amounts to 100% by weight, which comprises reacting hypophosphorous acid or its salts (component C) of the formula II

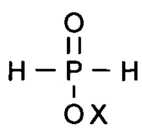

II

in which X is H, Na, K, or $NH_4$, in step 1, with acetone to give 1-hydroxy-1-methylethylphosphinate, in a step 2 reacting this 1-hydroxy-1-methylethylphosphinate in the presence of a free-radical initiator with an olefin (component E) of the formula IV

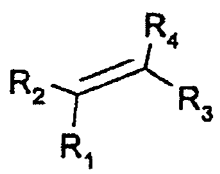

IV

in which $R_1$, $R_2$, $R_3$, and $R_4$ are as defined in formula I, then in a step 3 removing the acetone and in a step 4 reacting the resultant reaction mixture in the presence of a free-radical initiator with an $\alpha$,$\beta$-unsaturated carboxylic

acid derivative (component D) of the formula III,

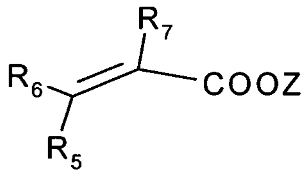

III

in which $R_5$, $R_6$, and $R_7$ are defined as in formula I, and Z is H, $C_{1-18}$-alkyl, or $C_{6-18}$-aryl, or is Y.

**Revendications**

**1.** Procédé de préparation de mélanges d'acides dialkylphosphiniques et d'autres composants, contenant

A) 98 à 100% en poids d'acides dialkylphosphiniques fonctionnalisés par monocarboxyle de formule (I)

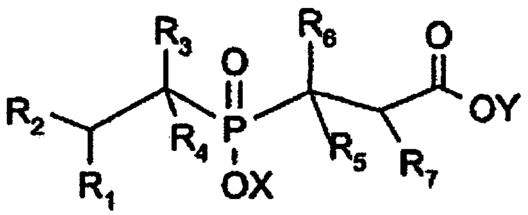

(I)

dans laquelle $R_1$, $R_2$, $R_3$, $R_4$, $R_5$, $R_6$, $R_7$ sont identiques ou différents et signifient indépendamment l'un de l'autre, H, méthyle, éthyle, n-propyle, iso-propyle, n-butyle, iso-butyle, tert-butyle et/ou phényle,

X, Y sont identiques ou différents et représentent, indépendamment l'un de l'autre, H, Li, Na, K ou $NH_4$, et

B) 0 à 2% en poids d'halogènes,

la somme des composants valant toujours 100% en poids **caractérisé en ce qu'**on transforme de l'acide hypophosphoreux ou ses sels (composant C) de formule II

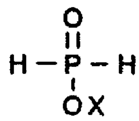

II

dans laquelle X signifie H, Na, K ou $NH_4$, en présence d'un initiateur de radicaux avec un dérivé d'acide carboxylique $\alpha,\beta$-insaturé (composant D) de formule III,

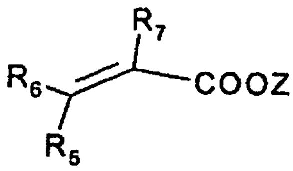

III

dans laquelle $R_5$, $R_6$, $R_7$ présentent la même signification que dans la formule I et Z signifie H, $C_{1-18}$-alkyle ou $C_{6-18}$-aryle ou représente Y et avec une oléfine (composant E) de formule IV

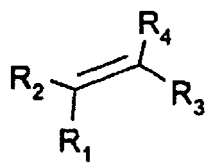

IV

dans laquelle $R_1$, $R_2$, $R_3$, $R_4$ présentent la même signification que dans la formule I, où les composants D et E ne sont pas dosés simultanément, mais à chaque fois séparément (séparément ou consécutivement).

2. Procédé selon la revendication 1, **caractérisé en ce que** $R_1$, $R_2$, $R_3$, $R_4$, $R_5$, $R_6$, $R_7$ sont identiques ou différents et signifient indépendamment l'un de l'autre, H, méthyle, éthyle, n-propyle, iso-propyle, n-butyle, iso-butyle, tert-butyle et/ou phényle,

3. Procédé selon la revendication 1 ou 2, **caractérisé en ce que** X signifie H et Z signifie H, méthyle, éthyle, n-propyle, isopropyle, n-butyle, isobutyle, tert-butyle, hydroxyéthyle ou hydroxypropyle.

4. Procédé selon l'une ou plusieurs des revendications 1 à 3, **caractérisé en ce que**, dans une étape 1, on transforme le composant C en présence d'un initiateur de radicaux avec le composant E en un acide alkylphosphoneux et dans l'étape 2, on estérifie la solution réactionnelle obtenue avec un alcool et on sépare l'ester de l'acide phosphoneux qui se forme par distillation, puis, dans une étape 3, on transforme, en présence d'un initiateur de radicaux ou basique avec le composant D, la solution réactionnelle obtenue étant ensuite hydrolysée dans une étape 4 avec catalyse acide, de manière à obtenir ainsi le composant A (acide dialkylphosphinique fonctionnalisé par monocarboxyle).

5. Procédé selon la revendication 4, **caractérisé en ce que**, dans l'étape 2, on estérifie directement l'acide alkylphosphoneux avec un alcool linéaire ou ramifié de formule générale M-OH, où M représente un radical alkyle linéaire ou ramifié comprenant 1 à 10 atomes de carbone.

6. Procédé selon la revendication 5, **caractérisé en ce qu'**il s'agit, pour l'alcool, de n-butanol, d'iso-butanol ou d'éthylhexanol.

7. Procédé selon l'une ou plusieurs des revendications 4 à 6, **caractérisé en ce qu'**il s'agit, pour le composant C, du sel d'ammonium ou de sodium de l'acide hypophosphoreux.

8. Procédé selon l'une ou plusieurs des revendications 1 à 7, **caractérisé en ce qu'**il s'agit, pour l'initiateur, de composés formant des peroxydes et/ou de composés peroxo, tels que le peroxyde d'hydrogène, le peroxyde de sodium, le peroxyde de lithium, le persulfate de potassium, le persulfate de sodium, le persulfate d'ammonium, le peroxodisulfate de sodium, le peroxoborate de potassium, l'acide peracétique, le peroxyde de benzoyle, le peroxyde de di-t-butyle et/ou l'acide peroxodisulfurique et/ou de composés azo, tels que l'azodiisobutyronitrile, le dichlorhydrate de 2,2-azobis(2-amidinopropane) et/ou le dichlorhydrate de 2,2'-azobis(N,N'-diméthylèneisobutyramidine).

**9.** Procédé selon l'une ou plusieurs des revendications 1 à 8, **caractérisé en ce qu'**il s'agit, pour les acides carboxyliques $\alpha,\beta$-insaturés, d'acide acrylique, d'ester méthylique de l'acide acrylique, d'ester éthylique de l'acide acrylique, d'acide méthacrylique, d'ester hydroxyéthylique de l'acide acrylique, d'acide crotonique, d'ester éthylique de l'acide crotonique, d'acide tiglinique (acide trans-2,3-diméthylacrylique), d'acide (trans)-2-penténoïque, d'acide furanne-2-carboxylique et/ou d'acide thiophène-2-carboxylique.

**10.** Procédé selon l'une ou plusieurs des revendications 1 à 9, **caractérisé en ce qu'**il s'agit, pour l'oléfine, d'éthylène, de propylène, de n-butène et/ou d'i-butène ou de mélanges quelconques de ceux-ci, de 1-hexène, de 1-heptène et/ou de 1-octène ; d'alcool allylique, d'allylamine, d'allylbenzène, d'allylanisole, de styrène, d'$\alpha$-méthylstyrène, de 4-méthylstyrène et/ou d'acétate de vinyle.

**11.** Procédé selon l'une ou plusieurs des revendications 1 à 10, **caractérisé en ce que** la transformation du composant C avec les composants D et/ou E est réalisée à une température de 50 à 150°C.

**12.** Procédé selon l'une ou plusieurs des revendications 1 à 11, **caractérisé en ce qu'**il s'agit pour l'acide dialkylphosphinique fonctionnalisé par monocarboxyle, d'acide 3-(éthylhydroxyphosphinyl)-propionique, d'acide 3-(propylhydroxyphosphinyl)-propionique, d'acide 3-(éthylhydroxyphosphinyl)-butyrique, d'acide 3-(éthylhydroxyphosphinyl)-2-méthylpropionique, d'acide 3-(butylhydroxyphosphinyl)-propionique, d'acide 3-(propylhydroxyphosphinyl)-butyrique, d'acide 3-(butylhydroxyphosphinyl)-butyrique, d'acide 3-(éthylhydroxyphosphinyl)-pentanoïque, d'acide 3-(propylhydroxyphosphinyl)-pentanoïque, d'acide 3-(butylhydroxyphosphinyl)-pentanoïque, d'acide 3-(propylhydroxyphosphinyl)-2-méthylpropionique, d'acide 3-(butylhydroxyphosphinyl)-2-méthylpropionique, d'acide 3-(éthylhydroxyphosphinyl)-2-méthylbutyrique, d'acide 3-(propylhydroxyphosphinyl)-2-méthylbutyrique et/ou d'acide 3-(butylhydroxyphosphinyl)-2-méthylbutyrique.

**13.** Procédé de préparation de mélanges d'acides dialkylphosphiniques et d'autres composants, contenant

A) 98 à 100% en poids d'acides dialkylphosphiniques fonctionnalisés par monocarboxyle de formule (I)

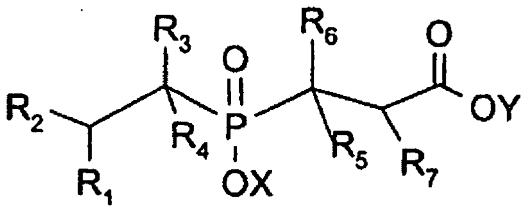

(I)

dans laquelle $R_1$, $R_2$, $R_3$, $R_4$, $R_5$, $R_6$, $R_7$ sont identiques ou différents et signifient indépendamment l'un de l'autre, H, méthyle, éthyle, n-propyle, iso-propyle, n-butyle, iso-butyle, tert-butyle et/ou phényle,

X, Y sont identiques ou différents et représentent, indépendamment l'un de l'autre, H, Li, Na, K ou $NH_4$, et

B) 0 à 2% en poids d'halogènes,

la somme des composants valant toujours 100% en poids **caractérisé en ce qu'**on transforme de l'acide hypophosphoreux ou ses sels (composant C) de formule II

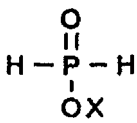

II

dans laquelle X signifie H, Na, K ou $NH_4$, dans une étape 1 avec de l'acétone en 1-hydroxy-1-dialkylphosphinate, dans une étape 2, on transforme ce 1-hydroxy-1-dialkylphosphinate en présence d'un initiateur de radicaux avec un dérivé d'acide carboxylique $\alpha,\beta$-insaturé (composant D) de formule III,

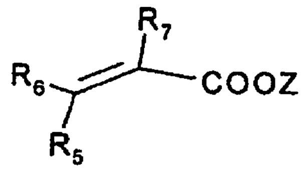

III

dans laquelle $R_5$, $R_6$, $R_7$ présentent la même signification que dans la formule I et Z signifie H, $C_{1-18}$-alkyle ou $C_{6-18}$-aryle ou Y, puis dans une étape 3, on sépare l'acétone et dans une étape 4, on transforme le mélange réactionnel obtenu en présence d'un initiateur de radicaux avec une oléfine (composant E) de formule IV

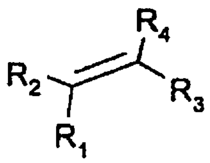

IV

dans laquelle $R_1$, $R_2$, $R_3$, $R_4$ présentent la même signification que dans la formule I.

**14.** Procédé de préparation de mélanges d'acides dialkylphosphiniques et d'autres composants, contenant

A) 98 à 100% en poids d'acides dialkylphosphiniques fonctionnalisés par monocarboxyle de formule (I)

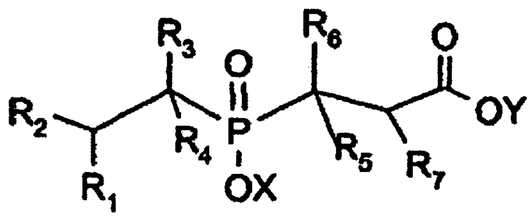

(I)

dans laquelle $R_1$, $R_2$, $R_3$, $R_4$, $R_5$, $R_6$, $R_7$ sont identiques ou différents et signifient indépendamment l'un de l'autre, H, méthyle, éthyle, n-propyle, iso-propyle, n-butyle, iso-butyle, tert-butyle et/ou phényle,

X, Y sont identiques ou différents et représentent, indépendamment l'un de l'autre, H, Li, Na, K ou $NH_4$, et

B) 0 à 2% en poids d'halogènes,
la somme des composants valant toujours 100% en poids **caractérisé en ce qu'**on transforme l'acide hypophosphoreux ou ses sels (composant C) de formule II

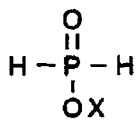

II

dans laquelle X signifie H, Na, K ou $NH_4$, dans une étape 1 avec de l'acétone en 1-hydroxy-1-méthyléthylphosphinate, dans une étape 2, on transforme ce 1-hydroxy-1-méthyléthylphosphinate en présence d'un initiateur de radicaux avec une oléfine (composant E) de formule IV

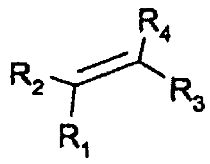

IV

dans laquelle $R_1$, $R_2$, $R_3$, $R_4$ présentent la même signification que dans la formule I, puis dans une étape 3 on sépare l'acétone et dans une étape 4, on transforme le mélange réactionnel obtenu en présence d'un initiateur de radicaux avec ledit un dérivés d'acide carboxylique $\alpha,\beta$-insaturé (composant D) de formule III

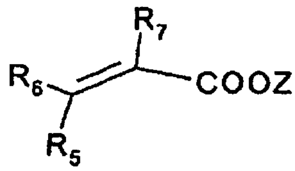

III

dans laquelle $R_5$, $R_6$, $R_7$ présentent la même signification que dans la formule I et Z signifie H, $C_{1-18}$-alkyle ou $C_{6-18}$-aryle ou représente Y.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2528420 A
- JP 5194562 A
- EP 1544205 A
- EP 0516346 A1


### In der Beschreibung aufgeführte Nicht-Patentliteratur


- **V. K. KHAJRULLIN ; F. M. KONDRAT'EVA ; A. N. PUDOVIK.** *Z. obsc. Chim.,* 1968, vol. 38, 291-294
- **KURDYUMOVA, N. R. ; ROZHKO, L. F. ; RAGULIN, V. V. ; TSVETKOV, E. N.** *Russian Journal of General Chemistry (Translation of Zhurnal Obshchei Khimii,* 1997, vol. 67 (12), 1852-1856
- **V.K. CHAJRULLIN ; R. R. SHAGIDULLIN.** *Z. Obschei. Khim.,* 1966, vol. 36, 289-296